(19) Europäisches Patentamt
European Patent Office
Office européen des brevets

(11) Publication number: **0 522 372 A2**

(12) # EUROPEAN PATENT APPLICATION

(21) Application number: **92110842.9**

(22) Date of filing: **26.06.92**

(51) Int. Cl.5: **A01N 47/30**, //(A01N47/30, 39:02,43:707,47:30,43:40,43:88, 37:40,37:48,47:12,39:04)

(30) Priority: **28.06.91 JP 159000/91**
**13.08.91 JP 203051/91**
**29.10.91 JP 283355/91**

(43) Date of publication of application:
**13.01.93 Bulletin 93/02**

(84) Designated Contracting States:
**DE FR GB IT NL**

(71) Applicant: **MITSUI PETROCHEMICAL INDUSTRIES, LTD.**
**2-5, Kasumigaseki 3-chome Chiyoda-ku**
**Tokyo(JP)**

(72) Inventor: **Takematsu, Tetsuo**
**612 Mine-machi**
**Utsunomiya-shi, Tochigi-ken(JP)**
Inventor: **Hamada, Naoshi, c/o Mitsui Petrochem. Ind. Ltd.**
**1-2, Waki 6-chome, Waki-cho**
**Kuga-gun, Yamaguchi-ken(JP)**
Inventor: **Ishitoku, Takeshi, c/o Mitsui Petrochem. Ind. Ltd.**
**1-2, Waki 6-chome, Waki-cho**
**Kuga-gun, Yamaguchi-ken(JP)**
Inventor: **Kihara, Noriaki, c/o Mitsui Petrochem. Ind. Ltd.**
**1-2, Waki 6-chome, Waki-cho**
**Kuga-gun, Yamaguchi-ken(JP)**
Inventor: **Kuramochi, Hitoshi, c/o Mitsui Petrochem. Ind. Ltd**
**1-2, Waki 6-chome, Waki-cho**
**Kuga-gun, Yamaguchi-ken(JP)**
Inventor: **Matsuyoshi, Toru, c/o Mitsui Petrochem. Ind. Ltd**
**1-2, Waki 6-chome, Waki-cho**
**Kuga-gun, Yamaguchi-ken(JP)**
Inventor: **Nagai, Naoshi, c/o Mitsui Petrochem. Ind. Ltd**
**1-2, Waki 6-chome, Waki-cho**
**Kuga-gun, Yamaguchi-ken(JP)**

(74) Representative: **Hansen, Bernd, Dr. Dipl.-Chem. et al**
**Hoffmann, Eitle & Partner Patent- und Rechtsanwälte Arabellastrasse 4 Postfach 81 04 20**
**W-8000 München 81(DE)**

(54) **Herbicidal composition.**

(57) The present invention relates to herbicidal compositions containing a urea compound represented by the following formula [I]:

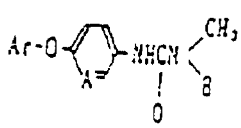

[I]

[wherein Ar is any one of a group represented by the formula:

EP 0 522 372 A2

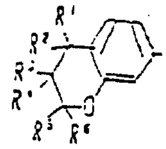

(wherein $R^1$ to $R^5$ independently represent a hydrogen atom, a lower alkyl group or a lower alkoxy group,
$R^6$ represents a hydrogen atom, a lower alkyl group, a lower alkoxyl group, or a hydroxyl group;
a pair of $R^1$ and $R^5$ or a pair of $R^5$ and $R^6$ each, taken together, may represent an alkylene linkage which may be substituted by lower alkyl group,
and may form 4 to 6 membered-ring with carbon atoms to which they are bound, or
$R^1$ and $R^2$, taken together, may form an ethylenedioxyl linkage, or
$R^4$ and $R^5$, taken together, may form a dichloromethylene linkage),
A represents

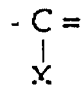

(wherein X represents a hydrogen atom, a chlorine atom, a nitro group or a trifluoromethyl group) and
B represents a hydrogen atom, methyl group or methoxy group]
and (ii) a compound represented by the following formula [a]:

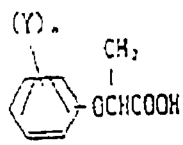

[a]

(wherein n is 1 or 2, Y is a chlorine atom) or
3,6-dichloropicolinic acid, 2,4-dichlorophenoxy acetic acid, or 4-amino-6-tert-butyl-3-methylthio-1,2,4-triazine-5-(4H)one.

The present invention relates to herbicidal compositions.

Background of the Invention

Wheat (*Triticum aestivum*), corn (*Zea mays*), rice (*Oryza sativa*) and soybeans (*Glycine max*) are important crops, and a number of herbicides have been used to increase the yield of these crops. Conventional herbicides are, however, not satisfactory in herbicidal activity and safety for crops. Herbicides, effective to kill weeds in a small amount and safe for crops, have been awaited.

Urea compounds having such herbicidal effect are proposed in Japanese Laid-Open (kokai) patent Publication No.10779/1988 and are represented by the following general formula [I']:

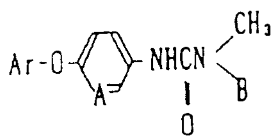

[I']

[wherein Ar is any one of the formula:

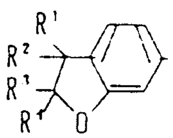
,
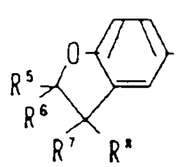
,
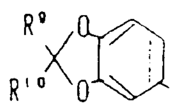

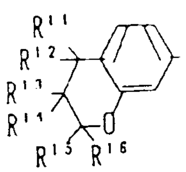
,
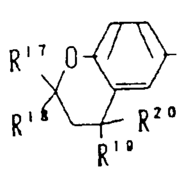
,
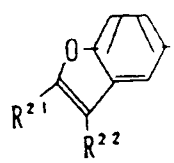

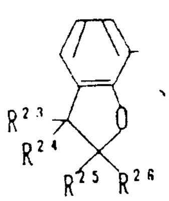
,
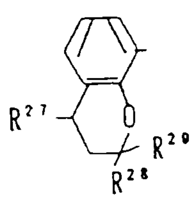
,
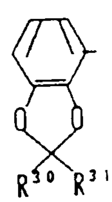

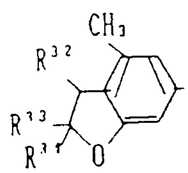
or
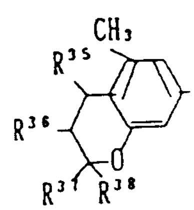

(wherein $R^1$ to $R^{15}$ and $R^{17}$ to $R^{38}$ independently represent a hydrogen atom, a lower alkyl group or a lower alkoxy group,

$R^{16}$ represents a hydrogen atom, lower alkyl group, lower alkoxyl group or hydroxyl group;

a pair of $R^2$ and $R^3$, a pair of $R^6$ and $R^7$, a pair of $R^9$ and $R^{10}$, a pair of $R^{11}$ and $R^{15}$, and a pair of $R^{15}$ and $R^{16}$ each, taken together, may represent an alkylene linkage which may be substituted by a lower alkyl group and may form 5 or 6 membered-ring with carbon atoms to which they are bound, or $R^{11}$ and $R^{12}$, taken together, may form an ethylenedioxyl linkage, or $R^{14}$ and $R^{15}$, taken together, may form a dichloromethylene linkage), A represents a nitrogen atom or

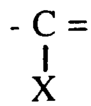

(wherein X represents a hydrogen atom, a chlorine atom, a nitro group or a trifluoromethyl group) and B represents a hydrogen atom, a methyl group or methoxy group].

The compounds of the following formula [a] - [i]:

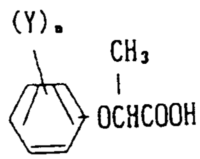

[a]

(wherein n is 1 or 2, Y is a chlorine atom)

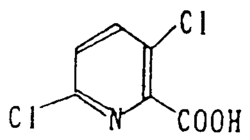

[a']

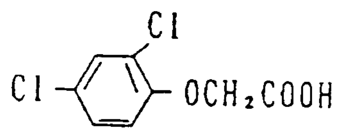

[a'']

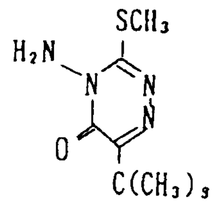

[b]

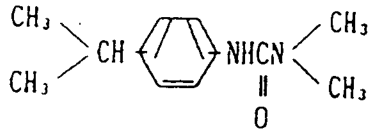

[c]

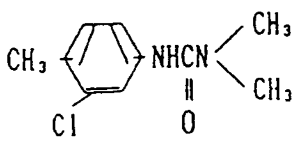

[d]

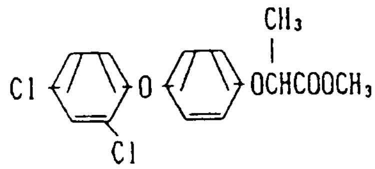

[e]

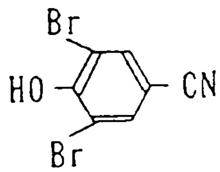

[f]

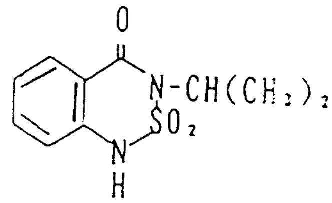

[g]

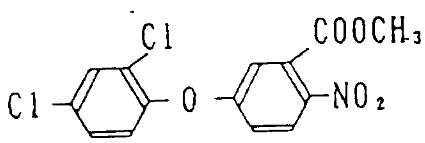

[h]

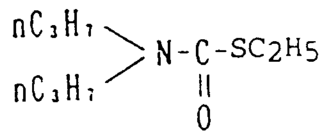

[i]

are also known as herbicides (Herbicide Handbook of the Weed Science Society of America., 6th Ed., 1989; Crop Protection Chemicals Reference 7th Ed., 1991; Farm Chemicals Handbook, 1988; European Directory of Agrochemical Products, vol. 2; Herbicides 2nd Ed).

However, the above compound represented by the formula [I'] and the above compound represented by the formula [a]-[i] have drawbacks that, when those compounds are used alone, they are effective on controlling various weeds only when used in a high dosage, but use of them in a low dosage is limited to small kind of controllable weeds. These drawbacks remain to be solved. The present inventors have attempted to solve the problem by using a combination of various compounds having herbicidal activity.

It is an object of this invention to provide a herbicidal composition capable of controlling weeds which are difficult to control with a herbicidally active compound alone.

It is another object of this invention to provide a herbicidal composition having excellent herbicidal activity even in relatively small dose.

It is further another object of this invention to provide a herbicidal composition having high safety on crops such as wheat, corn, etc.

Summary of the Invention

The present invention is characterized by the following description.

(1) A herbicidal composition comprising (i) at least one compound selected from the group consisting of the urea compounds represented by the following general formula [I]:

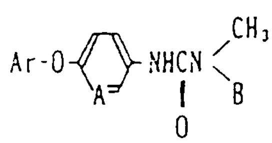

[I]

[wherein Ar is any one of a group represented by the formula:

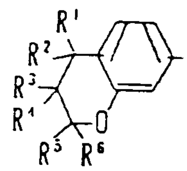

(wherein $R^1$ to $R^5$ independently represent a hydrogen atom, a lower alkyl group or a lower alkoxy group, $R^6$ represents a hydrogen atom, a lower alkyl group, a lower alkoxyl group, or hydroxyl group;
a pair of $R^1$ and $R^5$ or a pair of $R^5$ and $R^6$ each, taken together, may represent an alkylene linkage which may be substituted by lower alkyl group,
and may form 4 to 6 membered-ring with carbon atoms to which they are bound, or
$R^1$ and $R^2$, taken together, may form an ethylenedioxyl linkage, or
$R^4$ and $R^5$, taken together, may form a dichloromethylene linkage),
A represents

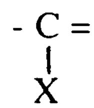

(wherein X represents a hydrogen atom, a chlorine atom, a nitro group or a trifluoromethyl group) and
B represents a hydrogen atom, a methyl group or methoxy group]
and (ii) a compound represented by the following formula [a]:

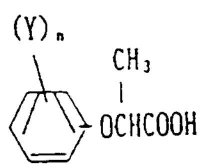

[a]

(wherein n is 1 or 2, Y is a chlorine atom)
or its salt or ester, as active ingredients.
(2) A herbicidal composition comprising (i) at least one compound selected from the group consisting of the urea compounds represented by the general formula [I], (ii) a compound represented by the formula [a] or a compound represented by the following formula [b]:

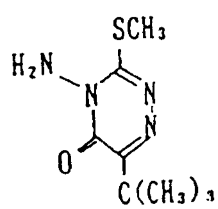

[b]

and (iii) at least one compound selected from the group consisting of the compounds represented by the following formula:

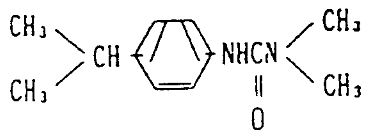

[c]

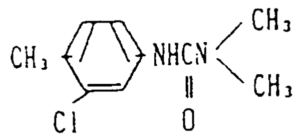

[d]

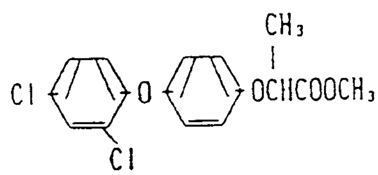

[e],

as active ingredients.

(3) The herbicidal composition of (1) or (2) which is applied to wheat.

(4) A herbicidal composition comprising (i) at least one compound selected from the group consisting of the urea compounds represented by the formula [I] and (ii) a compound represented by the following formula [a']:

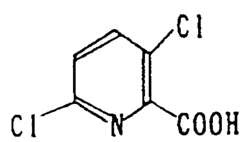

[a']

or its salt or ester, as active ingredients.

(5) The herbicidal composition of (4) which further comprises at least one compound selected from the group consisting of compounds of the following formula:

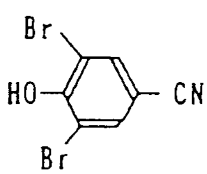

[f]

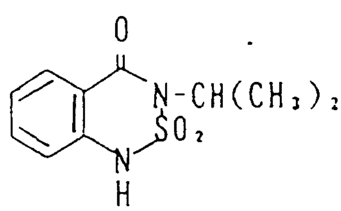

[g]

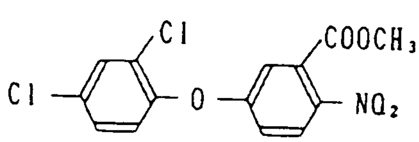

[h] or

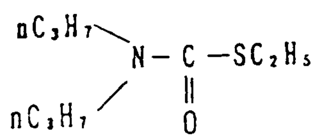

[i],

as an active ingredient.

(6) The herbicidal composition of (4) or (5) which is applied to corn.

(7) A herbicidal composition comprising (i) at least one compound selected from the group consisting of the urea compounds represented by the formula [I] and (ii) a compound represented by the following formula [a'']:

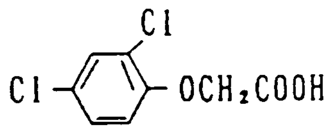

[a'']

or its salt or ester, as active ingredients,

and (iii) a spreader containing a nonionic surfactant or an anionic surfactant.

(8) A herbicidal composition comprising (i) at least one compound selected from the group consisting of the urea compounds represented by the formula [I], (ii) a compound represented by the formula [a''], (iii) at least one compound selected from compounds represented by the formula [f], [g], [h] and [i], as active ingredients, and (iv) a spreader containing a nonionic surfactant or an anionic surfactant.

(9) The herbicidal composition of (7) or (8) in which a nonionic surfactant is a polyoxyethylenealkyl ether or a polyoxyethylenealkylaryl ether.

(10) The herbicidal composition of (7) or (8) in which an anionic surfactant is a dialkylsulfosuccinic acid ester.

(11) The herbicidal composition of (7) or (8) which further comprises a nitrogen fertilizer.

(12) The herbicidal composition of (11) in which a nitrogen fertilizer is a ureaammonium nitrate.

(13) The herbicidal composition of (7) - (12) which is applied to corn.

(14) A herbicidal composition comprising (i) at least one compound selected from the group consisting of the urea compounds represented by the formula [I]

(ii) a compound represented by the formula [a]

and

(iii) a compound represented by the formula [b],

as active ingredients.

(15) A herbicidal composition of (14) which further comprises at least one compound selected from compounds represented by the formula [c], [d], and [e].

The present invention provides herbicidal compositions having an excellent herbicidal activity on various weeds even in a small amount and high safety on crops, that is, the least phytotoxicity to crops.

## Detailed Description of the Invention

In the general formula [I], lower alkyl represented by $R^1$ to $R^6$ includes methyl, ethyl, n-propyl, isopropyl, n-butyl, isobutyl, sec-butyl and tert-butyl, and lower alkoxy includes methoxy, ethoxy, n-propoxy, isopropoxy, n-butoxy, isobutoxy and sec-butoxy.

Examples of the general formula [I] are listed in Table 1.

Table 1(1)

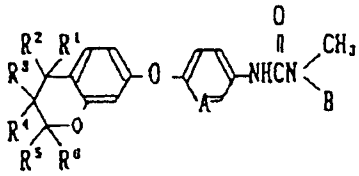

| Compound No. | $R^1$ | $R^2$ | $R^3$ | $R^4$ | $R^5$ | $R^6$ | 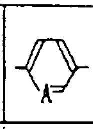 | B |
|---|---|---|---|---|---|---|---|---|
| 1 | H | H | H | H | H | H | 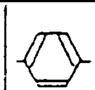 | $CH_3$ |
| 2 | H | H | H | H | H | H | 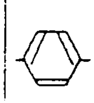 | $OCH_3$ |
| 3 | $CH_3$ | H | H | H | H | H | 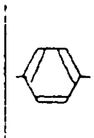 | $CH_3$ |
| 4 | $CH_3$ | H | H | H | H | H | 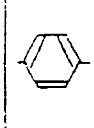 | $OCH_3$ |
| 5 | H | H | H | H | $CH_3$ | H | 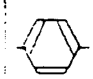 | H |
| 6 | H | H | H | H | $CH_3$ | H | 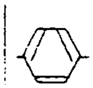 | $CH_3$ |
| 7 | H | H | H | H | $CH_3$ | H | 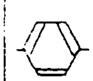 | $OCH_3$ |
| 8 | $CH_3$ | $CH_3$ | H | H | H | H | 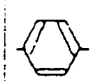 | $CH_3$ |
| 9 | $CH_3$ | $CH_3$ | H | H | H | H | 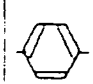 | $OCH_3$ |
| 10 | H | H | H | H | $CH_3$ | $CH_3$ | 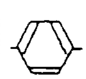 | H |

Table 1(2)

| Compound No. | $R^1$ | $R^2$ | $R^3$ | $R^4$ | $R^5$ | $R^6$ | 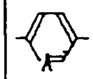 | B |
|---|---|---|---|---|---|---|---|---|
| 11 | H | H | H | H | $CH_3$ | $CH_3$ | 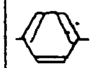 | $CH_3$ |
| 12 | H | H | H | H | $CH_3$ | $CH_3$ | 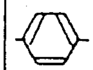 | $OCH_3$ |
| 13 | H | H | H | H | $CH_3$ | $CH_3$ | 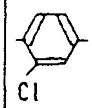 | $CH_3$ |
| 14 | H | H | H | H | $CH_3$ | $CH_3$ | 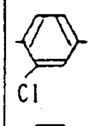 | $OCH_3$ |
| 15 | H | H | H | H | $CH_3$ | $CH_3$ | 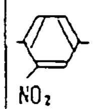 | $CH_3$ |
| 16 | H | H | H | H | $CH_3$ | $CH_3$ | 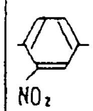 | $OCH_3$ |
| 17 | H | H | H | H | $CH_3$ | $CH_3$ | 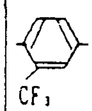 | $CH_3$ |
| 18 | H | H | H | H | $CH_3$ | $CH_3$ | 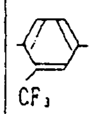 | $OCH_3$ |
| 19 | $CH_3$ | $CH_3$ | H | H | $CH_3$ | H | 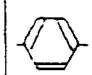 | $CH_3$ |
| 20 | $CH_3$ | $CH_3$ | H | H | $CH_3$ | H | 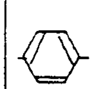 | $OCH_3$ |
| 21 | $CH_3$ | H | H | H | $CH_3$ | $CH_3$ | 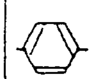 | $CH_3$ |
| 22 | $CH_3$ | H | H | H | $CH_3$ | $CH_3$ | 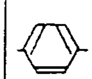 | $OCH_3$ |
| 23 | $OCH_3$ | H | H | H | $CH_3$ | $CH_3$ | 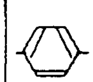 | $CH_3$ |

Table 1(3)

| Compound No. | $R^1$ | $R^2$ | $R^3$ | $R^4$ | $R^5$ | $R^6$ | 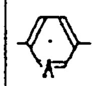 | B |
|---|---|---|---|---|---|---|---|---|
| 24 | $OCH_3$ | H | H | H | $CH_3$ | $CH_3$ | 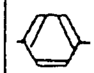 | $OCH_3$ |
| 25 | $CH_3$ | $CH_3$ | H | H | $CH_3$ | $OCH_3$ | 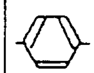 | H |
| 26 | $CH_3$ | $CH_3$ | H | H | $CH_3$ | $OCH_3$ | 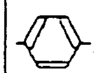 | $CH_3$ |
| 27 | $CH_3$ | $CH_3$ | H | H | $CH_3$ | $OCH_3$ | 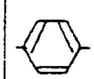 | $OCH_3$ |
| 28 | $CH_3$ | $CH_3$ | H | H | $CH_3$ | $OCH_3$ | 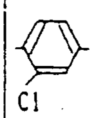 | H |
| 29 | $CH_3$ | $CH_3$ | H | H | $CH_3$ | $OCH_3$ | 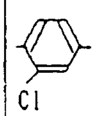 | $CH_3$ |
| 30 | $CH_3$ | $CH_3$ | H | H | $CH_3$ | $OCH_3$ | 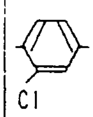 | $OCH_3$ |
| 31 | $CH_3$ | $CH_3$ | H | H | $CH_3$ | $OCH_3$ | 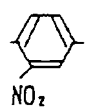 | H |
| 32 | $CH_3$ | $CH_3$ | H | H | $CH_3$ | $OCH_3$ | 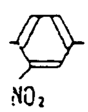 | $CH_3$ |
| 33 | $CH_3$ | $CH_3$ | H | H | $CH_3$ | $OCH_3$ | 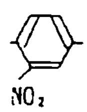 | $OCH_3$ |
| 34 | $CH_3$ | $CH_3$ | H | H | $CH_3$ | $OCH_3$ | 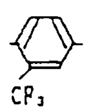 | H |
| 35 | $CH_3$ | $CH_3$ | H | H | $CH_3$ | $OCH_3$ | 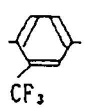 | $CH_3$ |

Table 1(4)

| Compound No. | $R^1$ | $R^2$ | $R^3$ | $R^4$ | $R^5$ | $R^6$ | 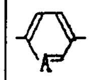 | B |
|---|---|---|---|---|---|---|---|---|
| 36 | $CH_3$ | $CH_3$ | H | H | $CH_3$ | $OCH_3$ | 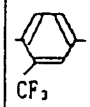 | $OCH_3$ |
| 37 | $CH_3$ | $CH_3$ | H | H | $CH_3$ | $OC_2H_5$ | 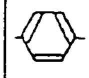 | $CH_3$ |
| 38 | $CH_3$ | $CH_3$ | H | H | $CH_3$ | $OC_2H_5$ | 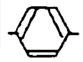 | $OCH_3$ |
| 39 | $CH_3$ | $CH_3$ | H | H | $CH_3$ | $OC_3H_7^i$ | 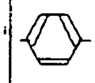 | $CH_3$ |
| 40 | $CH_3$ | $CH_3$ | H | H | $CH_3$ | $OC_3H_7^i$ | 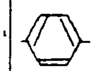 | $OCH_3$ |
| 41 | $CH_3$ | $CH_3$ | H | H | $CH_3$ | $OC_3H_7^i$ | 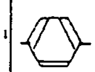 | H |
| 42 | $CH_3$ | $CH_3$ | H | H | $CH_3$ | $OC_3H_7^i$ | 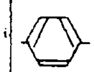 | $CH_3$ |
| 43 | $CH_3$ | $CH_3$ | H | H | $CH_3$ | $OC_3H_7^i$ | 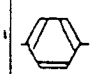 | $OCH_3$ |
| 44 | $OCH_3$ | H | H | H | H | H | 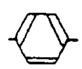 | $CH_3$ |
| 45 | $OCH_3$ | H | H | H | H | H | 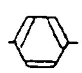 | $OCH_3$ |
| 46 | H | H | H | H | $C_2H_5$ | H | 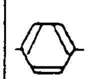 | $CH_3$ |
| 47 | H | H | H | H | $C_2H_5$ | H | 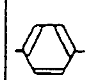 | $OCH_3$ |
| 48 | H | H | H | H | $C_3H_7^i$ | H | 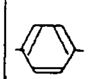 | H |

Table 1(5)

| Compound No. | $R^1$ | $R^2$ | $R^3$ | $R^4$ | $R^5$ | $R^6$ | 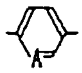 | B |
|---|---|---|---|---|---|---|---|---|
| 49 | H | H | H | H | $C_3H_7{}^i$ | H | 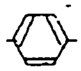 | $CH_3$ |
| 50 | H | H | H | H | $C_3H_7{}^i$ | H | 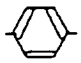 | $OCH_3$ |
| 51 | H | H | H | H | $OCH_3$ | H | 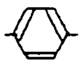 | H |
| 52 | H | H | H | H | $OCH_3$ | H | 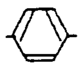 | $CH_3$ |
| 53 | H | H | H | H | $OCH_3$ | H | 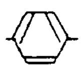 | $OCH_3$ |
| 54 | H | H | H | H | $OC_2H_5$ | H | 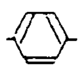 | $CH_3$ |
| 55 | H | H | H | H | $OC_2H_5$ | H | 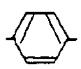 | $OCH_3$ |
| 56 | $C_2H_5$ | H | H | H | H | H | 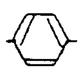 | H |
| 57 | $C_2H_5$ | H | H | H | H | H | 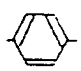 | $CH_3$ |
| 58 | $C_2H_5$ | H | H | H | H | H | 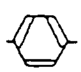 | $OCH_3$ |
| 59 | $CH_3$ | H | $CH_3$ | H | H | H | 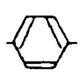 | H |
| 60 | $CH_3$ | H | $CH_3$ | H | H | H | 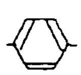 | $CH_3$ |
| 61 | $CH_3$ | H | $CH_3$ | H | H | H | 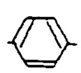 | $OCH_3$ |

Table 1(6)

| Compound No. | $R^1$ | $R^2$ | $R^3$ | $R^4$ | $R^5$ | $R^6$ | 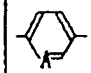 | B |
|---|---|---|---|---|---|---|---|---|
| 62 | $CH_3$ | H | H | H | $CH_3$ | H | 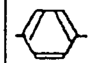 | H |
| 63 | $CH_3$ | H | H | H | $CH_3$ | H | 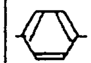 | $CH_3$ |
| 64 | $CH_3$ | H | H | H | $CH_3$ | H | 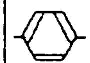 | $OCH_3$ |
| 65 | $CH_3$ | H | H | H | $OCH_3$ | H | 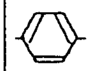 | $CH_3$ |
| 66 | $CH_3$ | H | H | H | $OCH_3$ | H | 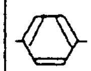 | $OCH_3$ |
| 67 | $CH_3$ | H | H | H | $OC_2H_5$ | H | 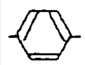 | $CH_3$ |
| 68 | $CH_3$ | H | H | H | $OC_2H_5$ | H | 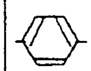 | $OCH_3$ |
| 69 | $OCH_3$ | H | H | H | $CH_3$ | H | 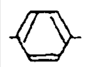 | $CH_3$ |
| 70 | $OCH_3$ | H | H | H | $CH_3$ | H | 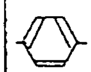 | $OCH_3$ |
| 71 | $OCH_3$ | H | H | H | $C_2H_5$ | H | 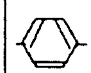 | $OCH_3$ |
| 72 | H | H | $CH_3$ | H | $CH_3$ | H | 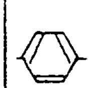 | $CH_3$ |
| 73 | H | H | $CH_3$ | H | $CH_3$ | H | 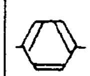 | $OCH_3$ |
| 74 | H | H | $CH_3$ | H | $C_2H_5$ | H | 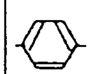 | $CH_3$ |

Table 1(7)

| Compound No. | $R^1$ | $R^2$ | $R^3$ | $R^4$ | $R^5$ | $R^6$ | 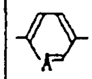 | B |
|---|---|---|---|---|---|---|---|---|
| 75 | H | H | $CH_3$ | H | $C_2H_5$ | H | 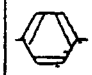 | $OCH_3$ |
| 76 | H | H | H | H | $CH_3$ | $C_2H_5$ | 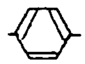 | $CH_3$ |
| 77 | H | H | H | H | $CH_3$ | $C_2H_5$ | 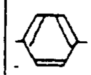 | $OCH_3$ |
| 78 | H | H | H | H | $CH_3$ | $C_3H_7^n$ | 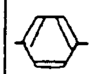 | $CH_3$ |
| 79 | H | H | H | H | $CH_3$ | $C_3H_7^n$ | 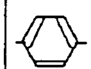 | $OCH_3$ |
| 80 | H | H | H | H | $CH_3$ | $C_3H_7^i$ | 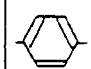 | $CH_3$ |
| 81 | H | H | H | H | $CH_3$ | $C_3H_7^i$ | 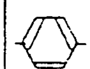 | $OCH_3$ |
| 82 | H | H | H | H | $C_2H_5$ | $C_2H_5$ | 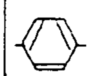 | $CH_3$ |
| 83 | H | H | H | H | $C_2H_5$ | $C_2H_5$ | 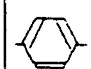 | $OCH_3$ |
| 84 | H | H | H | H | $C_2H_5$ | $C_3H_7^n$ | 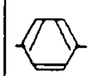 | $CH_3$ |
| 85 | H | H | H | H | $C_2H_5$ | $C_3H_7^n$ | 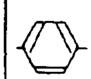 | $OCH_3$ |
| 86 | H | H | H | H | $-(CH_2)_3-$ | | 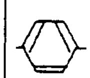 | H |
| 87 | H | H | H | H | $-(CH_2)_3-$ | | 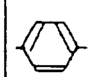 | $CH_3$ |

Table 1(8)

| Compound No. | $R^1$ | $R^2$ | $R^3$ | $R^4$ | $R^5$ | $R^6$ | 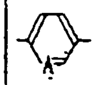 | B |
|---|---|---|---|---|---|---|---|---|
| 88 | H | H | H | H | $-(CH_2)_3-$ | | 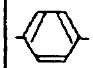 | $OCH_3$ |
| 89 | H | H | H | H | $CH_3$ | $OCH_3$ | 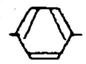 | H |
| 90 | H | H | H | H | $CH_3$ | $OCH_3$ | 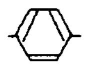 | $CH_3$ |
| 91 | H | H | H | H | $CH_3$ | $OCH_3$ | 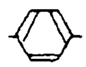 | $OCH_3$ |
| 92 | H | H | H | H | $CH_3$ | $OC_2H_5$ | 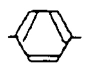 | $CH_3$ |
| 93 | H | H | H | H | $CH_3$ | $OC_2H_5$ | 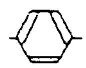 | $OCH_3$ |
| 94 | H | H | H | H | $CH_3$ | $OC_3H_7{}^i$ | 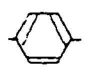 | $CH_3$ |
| 95 | H | H | H | H | $CH_3$ | $OC_3H_7{}^i$ | 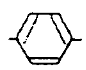 | $OCH_3$ |
| 96 | H | H | H | H | $C_2H_5$ | $OCH_3$ | 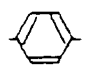 | H |
| 97 | H | H | H | H | $C_2H_5$ | $OCH_3$ | 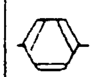 | $CH_3$ |
| 98 | H | H | H | H | $C_2H_5$ | $OCH_3$ | 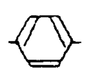 | $OCH_3$ |
| 99 | $CH_3$ | H | H | H | $CH_3$ | $OCH_3$ | 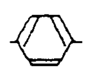 | H |
| 100 | $CH_3$ | H | H | H | $CH_3$ | $OCH_3$ | 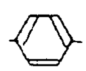 | $CH_3$ |

Table 1(9)

| Compound No. | $R^1$ | $R^2$ | $R^3$ | $R^4$ | $R^5$ | $R^6$ | 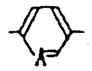 | B |
|---|---|---|---|---|---|---|---|---|
| 101 | $CH_3$ | H | H | H | $CH_3$ | $OCH_3$ | 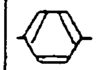 | $OCH_3$ |
| 102 | $CH_3$ | H | H | H | $C_2H_5$ | $OCH_3$ | 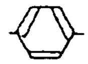 | H |
| 103 | $CH_3$ | H | H | H | $C_2H_5$ | $OCH_3$ | 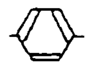 | $CH_3$ |
| 104 | $CH_3$ | H | H | H | $C_2H_5$ | $OCH_3$ | 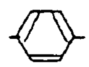 | $OCH_3$ |
| 105 | $OCH_3$ | H | $CH_3$ | H | $CH_3$ | H | 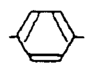 | $CH_3$ |
| 106 | $OCH_3$ | H | $CH_3$ | H | $CH_3$ | H | 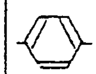 | $OCH_3$ |
| 107 | H | H | $CH_3$ | H | $CH_3$ | $CH_3$ | 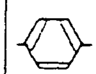 | H |
| 108 | H | H | $CH_3$ | H | $CH_3$ | $CH_3$ | 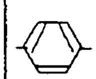 | $CH_3$ |
| 109 | H | H | $CH_3$ | H | $CH_3$ | $CH_3$ | 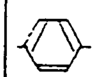 | $OCH_3$ |
| 110 | H | H | $CH_3$ | H | $CH_3$ | $OCH_3$ | 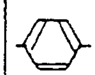 | H |
| 111 | H | H | $CH_3$ | H | $CH_3$ | $OCH_3$ | 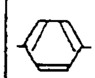 | $CH_3$ |
| 112 | H | H | $CH_3$ | H | $CH_3$ | $OCH_3$ | 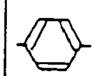 | $OCH_3$ |
| 113 | $OCH_3$ | H | H | H | $CH_3$ | $C_2H_5$ | 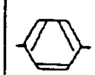 | $CH_3$ |

Table 1(10)

| Compound No. | $R^1$ | $R^2$ | $R^3$ | $R^4$ | $R^5$ | $R^6$ | 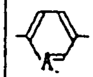 | B |
|---|---|---|---|---|---|---|---|---|
| 114 | $OCH_3$ | H | H | H | $CH_3$ | $C_2H_5$ | 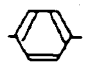 | $OCH_3$ |
| 115 | $OCH_3$ | H | H | H | $CH_3$ | $C_3H_7^i$ | 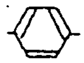 | $CH_3$ |
| 116 | $OCH_3$ | H | H | H | $CH_3$ | $C_3H_7^i$ | 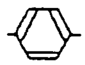 | $OCH_3$ |
| 117 | $OCH_3$ | H | H | H | $C_2H_5$ | $C_2H_5$ | 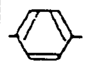 | $CH_3$ |
| 118 | $OCH_3$ | H | H | H | $C_2H_5$ | $C_2H_5$ | 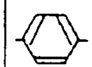 | $OCH_3$ |
| 119 | $OCH_3$ | H | H | H | $C_2H_5$ | $C_3H_7^n$ | 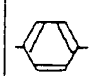 | H |
| 120 | $OCH_3$ | H | H | H | $C_2H_5$ | $C_3H_7^n$ | 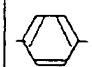 | $CH_3$ |
| 121 | $OCH_3$ | H | H | H | $C_2H_5$ | $C_3H_7^n$ | 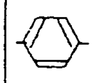 | $OCH_3$ |
| 122 | $-O(CH_2)_2O-$ | | H | H | $CH_3$ | H | 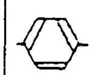 | $CH_3$ |
| 123 | $-O(CH_2)_2O-$ | | H | H | $C_2H_5$ | H | 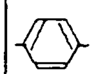 | $CH_3$ |
| 124 | $-O(CH_2)_2O-$ | | H | H | $C_2H_5$ | H | 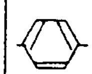 | $OCH_3$ |
| 125 | $-O(CH_2)_2O-$ | | H | H | $C_3H_7^i$ | H | 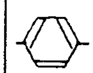 | H |
| 126 | $-O(CH_2)_2O-$ | | H | H | $C_3H_7^i$ | H | 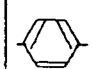 | $CH_3$ |

Table 1(11)

| Compound No. | $R^1$ | $R^2$ | $R^3$ | $R^4$ | $R^5$ | $R^6$ | 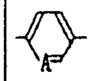 | B |
|---|---|---|---|---|---|---|---|---|
| 127 | $-O(CH_2)_2O-$ | | H | H | $C_3H_7^i$ | H | 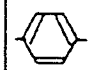 | $OCH_3$ |
| 128 | $-O(CH_2)_2O-$ | | $CH_3$ | H | $CH_3$ | H | 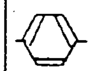 | $CH_3$ |
| 129 | $-O(CH_2)_2O-$ | | $CH_3$ | H | $CH_3$ | H | 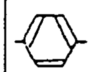 | $OCH_3$ |
| 130 | $-O(CH_2)_2O-$ | | H | H | $CH_3$ | $CH_3$ | 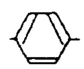 | $CH_3$ |
| 131 | $-O(CH_2)_2O-$ | | H | H | $CH_3$ | $CH_3$ | 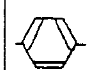 | $OCH_3$ |
| 132 | $-O(CH_2)_2O-$ | | H | H | $CH_3$ | $C_2H_5$ | 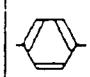 | H |
| 133 | $-O(CH_2)_2O-$ | | H | H | $CH_3$ | $C_2H_5$ | 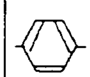 | $CH_3$ |
| 134 | $-O(CH_2)_2O-$ | | H | H | $CH_3$ | $C_2H_5$ | 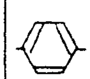 | $OCH_3$ |
| 135 | $-O(CH_2)_2O-$ | | H | H | $CH_3$ | $C_3H_7^i$ | 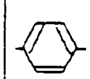 | $CH_3$ |
| 136 | $-O(CH_2)_2O-$ | | H | H | $CH_3$ | $C_3H_7^i$ | 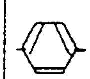 | $OCH_3$ |
| 137 | $-O(CH_2)_2O-$ | | H | H | $C_2H_5$ | $C_2H_5$ | 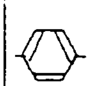 | $CH_3$ |
| 138 | $-O(CH_2)_2O-$ | | H | H | $C_2H_5$ | $C_2H_5$ | 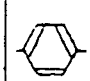 | $OCH_3$ |
| 139 | $-O(CH_2)_2O-$ | | H | H | $C_2H_5$ | $C_3H_7^n$ | 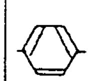 | H |

Table 1(12)

| Compound No. | $R^1$ | $R^2$ | $R^3$ | $R^4$ | $R^5$ | $R^6$ | 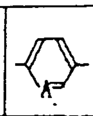 | B |
|---|---|---|---|---|---|---|---|---|
| 140 | $-O(CH_2)_2O-$ | | H | H | $C_2H_6$ | $C_3H_7{}^n$ | 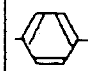 | $CH_3$ |
| 141 | $-O(CH_2)_2O-$ | | H | H | $C_2H_5$ | $C_3H_7{}^n$ | 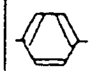 | $OCH_3$ |
| 142 | $CH_3$ | $CH_3$ | H | $-CCl_2-$ | | $CH_3$ | 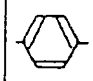 | $CH_3$ |
| 143 | $CH_3$ | $CH_3$ | H | $-CCl_2-$ | | $CH_3$ | 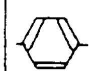 | $OCH_3$ |
| 144 | 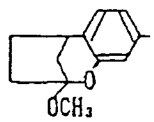 | | | | | | 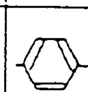 | H |
| 145 | 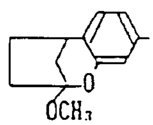 | | | | | | 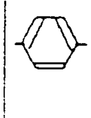 | $CH_3$ |
| 146 | 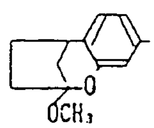 | | | | | | 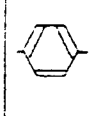 | $OCH_3$ |
| 147 | 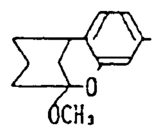 | | | | | | 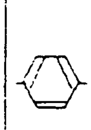 | H |
| 148 | 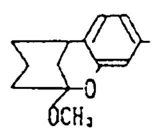 | | | | | | 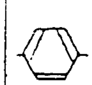 | $CH_3$ |
| 149 | 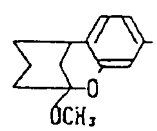 | | | | | | 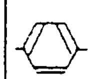 | $OCH_3$ |
| 150 | $CH_3$ | $CH_3$ | H | H | $CH_3$ | OH | 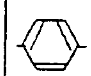 | H |

Table 1(13)

| Compound No. | $R^1$ | $R^2$ | $R^3$ | $R^4$ | $R^5$ | $R^6$ | 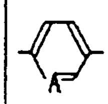 | B |
|---|---|---|---|---|---|---|---|---|
| 151 | $CH_3$ | $CH_3$ | H | H | $CH_3$ | OH | 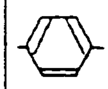 | $CH_3$ |
| 152 | $CH_3$ | $CH_3$ | H | H | $CH_3$ | OH | 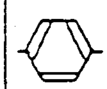 | $OCH_3$ |

The compound represented by the general formula [I] can be produced by the method disclosed in Japanese Laid-Open (kokai) patent Publication No 10779/1988, i.e., either

(i) by reacting aniline derivatives represented by the following formula:

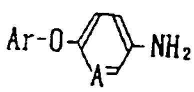

(wherein Ar and A are as defined in the above formula [I]) with methyl isocyanate, N, N-dimethylcarbamoyl chloride or N-methoxy-N-methylcarbamoyl chloride or

(ii) by reacting isocyanic acid ester represented by the following formula:

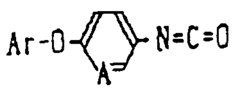

(wherein Ar and A are as defined in the above formula [I]) with amine represented by the following formula,

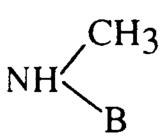

(wherein B is as defined in the above formula [I]).

The compound represented by the formula [a] includes 2-(4-chlorophenoxy)propionic acid, 2-(2,4-dichlorophenoxy)propionic acid, 2-(3, 4-dichlorophenoxy)propionic acid. The compound represented by the formula [a'] is clopyralid, that is, 3, 6-dichloropicolinic acid. The compound represented by the formula [a''] is 2,4-dichlorophenoxy acetic acid. The salt of the compound [a], [a'] or [a''] includes potassium salts, dimethylamine salts, diethylamine salts, monoethanolamine salts, octylamine salts and dodecylamine salts. The ester of the compound [a], [a'] or [a''] includes methyl ester, ethyl ester, butyl ester, isopropyl ester, isooctyl ester and 2-butoxyethyl ester. Any racemic compounds or optically active substances can be used as the compound [a] or the salts and esters of the compound [a].

Desired herbicidal effects can be brought by using a combination of urea compounds represented by the general formula [I] and a compound represented by the formula [a] (hereinafter referred to as "compound [a]"). Additionally, herbicidal effects on weeds at a more advanced stage of growth can be increased by using a combination of urea compounds represented by the general formula [I], compound a

and compounds represented by [c] - [e] described below or by using a combination of urea compounds represented by the general formula [I], compounds represented by the formula [b], and compounds represented by [c] - [e]. The following are compounds [b] - [e](hereinafter referred to as "compound [b]-[e]").

Compound [b]

Sencor
4-amino-6-tert-butyl-3-methylthio-1,2,4-triazine-5 (4H)one

Compound [c]

Isoproturon
3-(4-isopropylphenyl)-1, 1-demethylurea

Compound [d]

Chlorotoluron
3-(3-chloro-4-methylphenyl)-1,1-dimethylurea

Compound [e]

Illoxan
Methyl 2-[4-(2,4-dichlorophenoxy)phenoxy]propionate

Desired herbicidal effects can be brought by applying the urea compound represented by the general formula [I] and a compound represented by the formula [a'] or [a''] (hereinafter referred to as ''compound [a'] or [a''], respectively)

Additionally, herbicidal effects on weeds at a more advanced stage of growth can be increased by applying the urea compounds represented by the general formula [I], compound [a'] or [a''] and compounds represented by [f] - [i].

The following are compounds [f] - [i]

Compound [f]

Bromoxynil
3,5-dibromo-4-hydroxybenzonitril or its octanoate (4-octanoyloxy-3.5-dibromobenzonitril)

Compound [g]

Basagran
3-isopropyl-1H-2,1,3-benzothiadiazine-4(3H)-one-2,2-dioxide

Compound [h]

Bifenox
Methyl 5-(2,4-dichlorophenoxy)-2-nitrobenzoate

Compound [i]

EPTC
S-ethyl N, N-di-n-propylthiocarbamate

Preparation of Herbicidal Compositions of the Invention

The herbicidal composition of the present invention is prepared by preferably mixing active ingredients described above with a carrier, a surfactant, a dispersant agent, or adjuvant, etc. The mixture may be formulated into granules, wettable powders, an emulsion, fine granules or a dust according to the method known in the art. Suitable carriers include solid carriers such as talc, bentonite, clay, kaolin, diatomaceous

earth, white carbon, vermiculite, calcium hydroxide, silica sand, ammonium sulfate, urea and the like, and liquid carriers such as isopropylalcohol, xylene, cyclohexanone and the like. Surfactants and dispersant include alcohol sulfate salts, alkylbenzenesulfonate, ligninsulfonate, polyoxyethylene glycol ether, polyoxyethylene alkylaryl ether, polyoxyethylene sorbitan monoalkylate and the like. Adjuvants include carboxymethylcellulose, polyethylene glycol, gum arabic and the like.

Active ingredients can be mixed before formulation, and diluted with water before use. Alternatively, each active ingredients can be separately formulated, and they are mixed before use, diluting with water

The herbicide of the present invention is prepared as follows. The symbol % indicates weight % of the total composition.

Formulation 1 (Wettable powders)

6% of a compound represented by the formula [I], 3 - 24 % of at least one of the compound selected from the group consisting of Compound [a], [a'], [a''], [b] - [i], 3% of sodium salts of higher alcohol sulfate and 88 - 67 % of kaolin are homogeneously mixed and pulverized to form wettable powder.

Formulation 2 (Emulsion)

10% of a compound represented by the formula [I], 5 - 40 % of at least one of the compound selected from the group consisting of Compound [a], [a'], [a''], [b] - [i], 10% of polyoxyethylene alkylaryl ether and 30 % of cyclohexanone and 35 - 10 % of dimethylformamide are homogenously mixed and dissolved to form emulsion.

Tile herbicidal composition of the present invention may be applied by being diluted with water to bring the herbicidal composition to an appropriate concentration or may be directly applied.

The herbicidal compositions (1) - (6) described above can be used with spreaders when applied. Spreaders include one of the member of a class of polyoxyethylenealkyl ether, polyoxyethylenenonylphenyl ether, alkyldiglycol ether, fatty acid ester of polyoxyethylene polyoxyethylenesorbitan ether, dialkylsulfosuccinic acid ester, or silicon. The preferable concentration of the spreader to be added may be 0.01 - 1.0 %. The herbicidal composition of the present invention is used or formulated with nitrogen fertilizers such as ureaammonium nitrate (UAN 32, UAN28), if desired.

The herbicidal compositions (1) - (3) described above may be used as follows:

When urea compounds represented by the general formula [I] and compound a are used, the amount of application is dependent upon weed species, their growth stage and weed density in a field. Typically, 0.05-0.5 kg/ha of urea compounds represented by the general formula [I] and 0.05-0.25 kg/ha of compound a are preferably used.

In the case that urea compounds represented by the general formula [I], compound [a] and any one of the compounds [c] - [e] to be used, 0.05-0.5 kg/ha of urea compounds represented by the general formula [I] and 0.05-0.5 kg/ha of compound [a] and 0.5 - 2 kg/ha of any one of the compounds [c] - [e] are preferably used. In the case that urea compounds represented by the general formula [I], compound [b] and any one of the compounds [c] - [e] to be used, 0.05-0.5 kg/ha of urea compounds represented by the general formula [I] and 0.05-0.25 kg/ha of compound [b] and 0.5 - 2 kg/ha of any one of the compounds [c] - [e] are preferably used.

Tile herbicidal compositions (4) - (6) described above may be used as follows:

When urea compounds represented by the general formula [I] and compound [a'] are used, the amount of application is dependent upon weed species, their growth stage and weed density in a field. Typically, 0.05-0.5 kg/ha of urea compounds represented by the general formula [I] and 0.05-0.25 kg/ha of compound [a'] are preferably used. When at least one of the compounds [f] - [i] is further used with them, the preferable amount of the compound may be 0.02 - 1 kg/ha.

The herbicidal compositions (7) - (13) described above may be used as follows:

When the formulations of the present invention are diluted with water, spreaders containing a nonionic surfactant or an anionic surfactant can be added. The addition of spreaders can make the herbicidal composition more superior in herbicidal effects and safety for crops. Examples of a nonionic surfactant contained in spreaders include polyoxyethylene alkyl ether, polyoxyethylene alkylaryl ether, fatty acid ester of polyoxyethylene, fatty acid ester of glycerine, polyoxyethylene polysilyl ether.

Examples of a suitable nonionic surfactant contained in spreaders include polyoxyethylene alkyl ether, polyoxyethylene alkylaryl ether. Examples of spreaders containing polyoxyethylene alkyl ether include Genapol X-60 (Hoechst), Renex 36 (Bayer), Surfynol (Airproduct & Chemicals). Examples of spreaders containing polyoxyethylene alkylaryl ether include Ad-Here (J.R. Synprot) and Agral 90 (ICI).

Examples of an anionic surfactant contained in spreaders include dialkylsulfosuccinic acid ester, alkylbenzensulfate and fatty acid salts thereof. A suitable anionic surfactant includes dialkylsulfosuccinic acid ester. Examples of spreaders containing dialkylsulfosuccinic acid ester include Rapizol (Nippon Yushi)., etc.

A preferable amount of spreaders includes but is not limited to 0.01 - 0.5% (v/v) of a total volume of water used for application. In this instance, the volume of a nonionic or anionic surfactant contained in spreaders is preferably 0.005- 0.5% (v/v) of a total volume of water used for application.

The herbicidal composition of the present invention is used with a nitrogen fertilizer, if desired, and the combination further improve herbicidal effects and safety for crops. Nitrogen fertilizers include ureaammonium nitrate (UAN 32, UAN28). A preferable amount of nitrogen fertilizer used with the herbicidal composition includes but is not limited to 0.5-5% (v/v) of a total volume used of water for application.

In the herbicidal composition described above, when urea compounds represented by the general formula [I] and compound [a''] are used, the amount of application independent upon weed species, their growth stage and weed density in a field. Typically, 0.05-0.5 kg/ha of urea compounds represented by the general formula [I] and 0.05-0.25 kg/ha of compound [a''] are preferably used.

In the case where urea compounds represented by the general formula [I] and compound [a''] as well as a compound selected from the group consisting of the compounds [f] - [i] are used, 0.05-0.5 kg/ha of urea compounds represented by the general formula [I], 0.05-0.25 kg/ha of compound [a''], and 0.02-0.25 kg/ha of a compound selected from the compounds [f] - [i] are preferably used.

In the herbicide composition described in (14) and (15), an amount of urea compounds represented by the general formula [I], compound [a] and [b] to be used depends upon weed species, their growth stage and weed density in a field. Typically, 0.05-0.5 kg/ha of urea compounds represented by the general formula [I] and 0.05-0.5 kg/ha of compound [a] and 0.05-0.5 kg/ha of compound [b] are preferably used. When at least one of the compounds [c] - [e] is further used with them, the preferable amount of the compound may be 0.5 - 2kg/ha.

The herbicidal composition of the present invention can be applied to weeds at various stages of growth. In particular, an excellent herbicidal effect can be obtained by applying the herbicidal composition to the stalks and leaves of weeds during their growth.

The herbicide composition of the present invention can be used or formulated with insecticides, fungicides, bacteriocides or other herbicides, if necessary. The herbicidal composition of the present invention has a remarkable herbicidal activity on various broad leaf weeds such *Abutilon theophrasti, Xanthium strumarium, Amaranthus viridis, Chenopodium album, Datura stramonium, Bidens pilosa, Ipomoea hederacea, Ipomoea purpurea, Convolvulus arvensis, Polygonum species, Solanum nigrum, Cassia obtusifolia, Sida spinosa Sesbania exaltata, Euphorbia heterophylla, Sonchus asper, Viola arvensis, Veronica persica, Veronica hederaefolia, Stellaria media, Sinapis arvensis, Capsella bursapastoris, Lamium purpureum, Lamium amplexicaule, Matricaria chamomilla, Myosotis arvensis,Galium aparine and Alopecurus myosuroides* and safety on important crops such as wheat, barley and corn.

The present invention will be further described in Examples, which are not intended to limit the scope of the present invention.

Example 1

Plastic pots (1/2000a) were filled with sieved upland farm soil and seeded with *Galium aparine, Viola arvensis, Stellaria media. Matricaria chamomilla, Veronica hederaefolia, Alopecurus myosuroides,* and wheat. The seeds were covered with 1 cm of a soil layer. The plants were grown in the greenhouse. When wheat plants grew to bear 5 or 10 leaves, a prescribed amount of wettable powder prepared according to the Formulation 1 was dispersed in 1.5 liter per are of water, and the dispersion was sprayed on the stalks and leaves of the plant with a microspray. One month after treatment, herbicidal effect and phytotoxicity on the plants kept in the greenhouse were examined and evaluated according to the standard shown in Table 2. The results are shown in Table 3A and 3B. In Table 3A and 3B, the symbol * means comparative examples, a1 is potassium salts of d-2-(2,4-chlorophenoxy)propionic acid, a2 is potassium salts of d1-2-(2,4-dichlorophenoxy)propionic acid, a3 is dimethylamine salts of d1-2-(2,4-dichlorophenoxy)propionic acid, a4 is potassium salts of d1-2-(3,4-dichlorophenoxy)propionic acid, and L indicates the growth stage of the plants. For example, 5L represents a plant at a growth stage of bearing 5 leaves.

Table 2

| Evaluation standard | |
|---|---|
| Degree | Herbicidal effect and Phytotoxicity |
| 5.0 | more than 99% to 100% (withered) |
| 4.5 | 90% - 99% |
| 4.0 | 80% - 89% |
| 3.5 | 70% - 79% |
| 3.0 | 60% - 69% |
| 2.5 | 50% - 59% |
| 2.0 | 40% - 49% |
| 1.5 | 30% - 39% |
| 1.0 | 20% - 29% |
| 0.5 | 1% - 19% |
| 0 | less than 1% (no herbicidal effects or no phytotoxicity) |

Table 3 A(1)

| Compound | Rate (kg/ha) | Herbicidal effect | | | | | | Phyto-toxicity |
|---|---|---|---|---|---|---|---|---|
| | | *Galium aparine* | *Viola arvensis* | *Matricaria chamomilla* | *Stellaria media* | *Veronica hederaefolia* | *Alopecurus myosuroides* | wheat |
| | | 2-3L | 3L | 2-3L | 3-4L | 3-4L | 2-3L | 5L |
| 18* | 0.25 | 2.5 | 2 | 3.5 | 4.5 | 2 | 1.5 | 0 |
| 18+a1 | 0.125+0.125 | 4.5 | 4.5 | 4.5 | 5 | 5 | 1.5 | 0 |
| 18+a2 | 0.125+0.25 | 5 | 4.5 | 4.5 | 5 | 5 | 2 | 0 |
| 18+a3 | 0.125+0.125 | 5 | 5 | 4.5 | 4.5 | 5 | 1 | 0 |
| 18+a4 | 0.125+0.125 | 4.5 | 4.5 | 4 | 5 | 5 | 1 | 0 |
| a1* | 0.25 | 3 | 1 | 1.5 | 3.5 | 3.5 | 0 | 0 |
| a2* | 0.5 | 3 | 1.5 | 2 | 3.5 | 3 | 0 | 0 |
| a3* | 0.25 | 3 | 2 | 2.5 | 3.5 | 2.5 | 0 | 0 |
| a4* | 0.25 | 2.5 | 2 | 2 | 3 | 3.5 | 0 | 0 |
| b* | 0.25 | 1 | 1 | 3 | 3.5 | 2 | 1 | 0 |
| c* | 1.5 | 1 | 1 | 4.5 | 4 | 2.5 | 4.5 | 0 |
| d* | 1.5 | 1 | 1 | 4.5 | 4 | 2.5 | 4.5 | 0 |
| e* | 1.5 | 1 | 1 | 2 | 2 | 1 | 3.5 | 0 |
| 18+b* | 0.125+0.125 | 4.5 | 4.5 | 4.5 | 4.5 | 5 | 2 | 0 |
| a1+c* | 0.25+1.5 | 3.5 | 2 | 2.5 | 3 | 2.5 | 4.5 | 0 |
| a2+c* | 0.5+1.5 | 3.5 | 3 | 3 | 4 | 4 | 4.5 | 0 |
| a3+c* | 0.25+1.5 | 3.5 | 3 | 3 | 4 | 4 | 4.5 | 0 |
| a4+c* | 0.25+1.5 | 3.5 | 2 | 2.5 | 3 | 2.5 | 4.5 | 0 |
| a1+d* | 0.25+1.5 | 3.5 | 2 | 2.5 | 3 | 2.5 | 4.5 | 0 |
| a2+d* | 0.5+1.5 | 3.5 | 3 | 3 | 4 | 4 | 4.5 | 0 |
| a3+d* | 0.25+1.5 | 3.5 | 3 | 3 | 4 | 4 | 4.5 | 0 |
| a4+d* | 0.25+1.5 | 3.5 | 2 | 2.5 | 3 | 2.5 | 4.5 | 0 |
| a1+e* | 0.25+1.5 | 2.5 | 2 | 2.5 | 3 | 2.5 | 3 | 0 |
| a2+e* | 0.5+1.5 | 2.5 | 3 | 3 | 4 | 4 | 3 | 0 |
| a3+e* | 0.25+1.5 | 3 | 3 | 3 | 4 | 4 | 3 | 0 |
| a4+e* | 0.25+1.5 | 2 | 2 | 2.5 | 3 | 2.5 | 3 | 0 |
| b+c* | 0.125+1.5 | 1 | 2 | 2.5 | 3.5 | 3 | 4.5 | 0 |
| b+d* | 0.125+1.5 | 1 | 2 | 2.5 | 3.5 | 3 | 4.5 | 0 |
| b+e* | 0.125+1.5 | 1 | 2.5 | 2.5 | 3 | 3 | 3 | 0 |
| 18+a1+c | 0.125+0.125+1.5 | 5 | 5 | 5 | 5 | 5 | 5 | 0 |
| 18+a3+d | 0.125+0.125+1.5 | 5 | 5 | 5 | 5 | 5 | 5 | 0 |
| 18+a2+e | 0.125+0.25+1.5 | 5 | 5 | 5 | 5 | 5 | 4.5 | 0 |
| 18+a2+c | 0.125+0.125+1.5 | 5 | 5 | 5 | 5 | 5 | 5 | 0 |
| 18+b+c | 0.125+0.125+1.5 | 5 | 5 | 5 | 5 | 5 | 5 | 0 |
| 18+b+d | 0.125+0.125+1.5 | 5 | 5 | 5 | 5 | 5 | 5 | 0 |
| 18+b+e | 0.125+0.125+1.5 | 4.5 | 5 | 5 | 4.5 | 5 | 4 | 0 |

Table 3 A(2)

| Compound | Rate (kg/ha) | Herbicidal effect | | | | | | Phyto-toxicity |
|---|---|---|---|---|---|---|---|---|
| | | *Galium aparine* | *Viola arvensis* | *Matricaria chamomilla* | *Stellaria media* | *Veronica hederaefolia* | *Alopecurus myosuroides* | wheat |
| | | 2-3L | 3L | 2-3L | 3-4L | 3-4L | 2-3L | 5L |
| 27* | 0.25 | 3.5 | 4 | 3 | 3.5 | 3.5 | 1 | 0 |
| 27+a1 | 0.125+0.125 | 4.5 | 4.5 | 5 | 4.5 | 5 | 1 | 0 |
| 27+a2 | 0.125+0.25 | 5 | 5 | 5 | 5 | 5 | 2 | 0 |
| 27+a3 | 0.125+0.125 | 5 | 5 | 5 | 5 | 5 | 2 | 0 |
| 27+a4 | 0.125+0.125 | 4.5 | 4.5 | 5 | 5 | 5 | 2 | 0 |
| 27+b* | 0.125+0.125 | 4.5 | 4 | 5 | 5 | 4.5 | 1 | 0 |
| 27+a1+c | 0.125+0.125+1.5 | 5 | 5 | 5 | 5 | 5 | 5 | 0 |
| 27+a2+c | 0.125+0.25+1.5 | 5 | 5 | 5 | 5 | 5 | 5 | 0 |
| 27+a3+c | 0.125+0.125+1.5 | 5 | 5 | 5 | 5 | 5 | 5 | 0 |
| 27+a4+c | 0.125+0.125+1.5 | 4.5 | 4.5 | 5 | 5 | 5 | 5 | 0 |
| 27+a1+d | 0.125+0.125+1.5 | 4.5 | 4 | 5 | 5 | 5 | 5 | 0 |
| 27+a2+d | 0.125+0.25+1.5 | 5 | 5 | 5 | 5 | 5 | 5 | 0 |
| 27+a3+d | 0.125+0.125+1.5 | 5 | 5 | 5 | 5 | 5 | 5 | 0 |
| 27+a4+d | 0.125+0.125+1.5 | 4.5 | 4.5 | 5 | 5 | 4.5 | 5 | 0 |
| 27+a2+e | 0.125+0.25+1.5 | 4.5 | 4.5 | 5 | 5 | 5 | 4 | 0 |
| 27+a3+e | 0.125+0.125+1.5 | 4.5 | 4.5 | 5 | 5 | 5 | 4 | 0 |
| 27+b+c | 0.125+0.125+1.5 | 5 | 5 | 5 | 5 | 5 | 5 | 0 |
| 27+b+d | 0.125+0.125+1.5 | 5 | 5 | 5 | 5 | 5 | 5 | 0 |
| 27+b+e | 0.125+0.125+1.5 | 4 | 4 | 5 | 5 | 5 | 4 | 0 |
| 44* | 0.25 | 3.5 | 3.5 | 4 | 4 | 3 | 0 | 0 |
| 44+b* | 0.125+0.125 | 4.5 | 4.5 | 4 | 4.5 | 4 | 1 | 0 |
| 44+a2 | 0.125+0.25 | 4.5 | 4.5 | 4.5 | 4.5 | 4.5 | 2 | 0 |
| 44+a3 | 0.125+0.125 | 4.5 | 4.5 | 4.5 | 4.5 | 4.5 | 2 | 0 |
| 44+a2+c | 0.125+0.25+1.5 | 4.5 | 4.5 | 5 | 5 | 5 | 5 | 0 |
| 44+a3+c | 0.125+0.125+1.5 | 4.5 | 4.5 | 5 | 5 | 5 | 5 | 0 |
| 44+a2+d | 0.125+0.125+1.5 | 4.5 | 4.5 | 5 | 5 | 5 | 5 | 0 |
| 44+a3+d | 0.125+0.125+1.5 | 4.5 | 4.5 | 5 | 5 | 5 | 5 | 0 |

Table 3 B(1)

| Compound | Rate (kg/ha) | Herbicidal effect | | | | | | Phytotoxicity |
|---|---|---|---|---|---|---|---|---|
| | | *Galium aparine* | *Viola arvensis* | *Matricaria chamomilla* | *Stellaria media* | *Veronica hederaefolia* | *Alopecurus myosuroides* | wheat |
| | | 5-6L | 7L | 6-7L | 7-8L | 6-7L | 6-7L | 10L |
| al* | 0.25 | 2 | 1 | 2 | 3 | 2 | 0 | 0 |
| a2* | 0.5 | 2 | 1.5 | 2 | 3.5 | 2.5 | 0 | 0 |
| a3* | 0.25 | 2 | 1.5 | 2 | 3.5 | 2.5 | 0 | 0 |
| a4* | 0.25 | 2 | 1 | 2 | 3 | 2 | 0 | 0 |
| b* | 1.5 | 1 | 0.5 | 3.5 | 3 | 3 | 1 | 0 |
| c* | 1.5 | 1 | 0.5 | 3.5 | 3 | 3 | 4 | 0 |
| d* | 1.5 | 1 | 0.5 | 3.5 | 3 | 3 | 4 | 0 |
| e* | 1.5 | 1 | 0.5 | 1 | 2 | 1 | 3.5 | 0 |
| al+c* | 0.25+1.5 | 2.5 | 2 | 3.5 | 3.5 | 4 | 4 | 0 |
| a2+c* | 0.5+1.5 | 3 | 3 | 3.5 | 3.5 | 4 | 4 | 0 |
| a3+c* | 0.25+1.5 | 3 | 3 | 3.5 | 3.5 | 4 | 4 | 0 |
| a4+c* | 0.25+1.5 | 2 | 3 | 2 | 3 | 4 | 3.5 | 0 |
| a1+d* | 0.25+1.5 | 2.5 | 2 | 3.5 | 3.5 | 4 | 4 | 0 |
| a2+d* | 0.25+1.5 | 3 | 3 | 3.5 | 3.5 | 4 | 4 | 0 |
| a3+d* | 0.25+1.5 | 3 | 3 | 3.5 | 3.5 | 4 | 4 | 0 |
| a4+d* | 0.25+1.5 | 2 | 3 | 2 | 3 | 4 | 3.5 | 0 |
| a1+e* | 0.25+1.5 | 2.5 | 2 | 3.5 | 3.5 | 4 | 2 | 0 |
| a2+e* | 0.25+1.5 | 3 | 3 | 3.5 | 3.5 | 4 | 2.5 | 0 |
| a3+e* | 0.25+1.5 | 3 | 3 | 3.5 | 3.5 | 4 | 2.5 | 0 |
| a4+e* | 0.25+1.5 | 2 | 3 | 2 | 3 | 4 | 2 | 0 |

Table 3 B(2)

| Compound | Rate (kg/ha) | Herbicidal effect | | | | | | Phytotoxicity |
|---|---|---|---|---|---|---|---|---|
| | | *Galium aparine* | *Viola arvensis* | *Matricaria chamomilla* | *Stellaria media* | *Veronica hederaefolia* | *Alopecurus myosuroides* | wheat |
| | | 5-6L | 7L | 6-7L | 7-8L | 6-7L | 6-7L | 10L |
| b+c* | 0.25+1.5 | 2 | 1 | 2 | 3 | 3 | 4 | 0 |
| b+d* | 0.25+1.5 | 2 | 1 | 2 | 3 | 3 | 4 | 0 |
| b+e* | 0.25+1.5 | 2 | 1 | 2 | 3 | 3 | 2.5 | 0 |
| 27* | 0.25 | 3 | 3.5 | 3 | 3 | 3 | 0 | 0 |
| 27+a1 | 0.125+0.125 | 4.5 | 4.5 | 4.5 | 4.5 | 5 | 2 | 0 |
| 27+a2 | 0.125+0.25 | 5 | 4.5 | 5 | 5 | 5 | 2 | 0 |
| 27+a3 | 0.125+0.125 | 5 | 4.5 | 5 | 5 | 5 | 2 | 0 |
| 27+a4 | 0.125+0.125 | 4.5 | 4.5 | 5 | 5 | 4.5 | 2 | 0 |
| 27+b* | 0.125+0.125 | 3.5 | 3 | 3.5 | 3.5 | 3 | 1 | 0 |
| 27+a1+c | 0.125+0.125+1.5 | 4.5 | 4.5 | 5 | 5 | 5 | 4.5 | 0 |
| 27+a2+c | 0.125+0.25+1.5 | 5 | 5 | 5 | 5 | 5 | 5 | 0 |
| 27+a3+c | 0.125+0.125+1.5 | 5 | 5 | 5 | 5 | 5 | 5 | 0 |
| 27+a4+c | 0.125+0.125+1.5 | 4.5 | 5 | 4.5 | 5 | 5 | 5 | 0 |
| 27+a1+d | 0.125+0.125+1.5 | 4.5 | 4.5 | 5 | 5 | 5 | 4.5 | 0 |
| 27+a2+d | 0.125+0.125+1.5 | 5 | 5 | 5 | 5 | 5 | 5 | 0 |
| 27+a3+d | 0.125+0.125+1.5 | 5 | 5 | 5 | 5 | 5 | 5 | 0 |
| 27+a4+d | 0.125+0.125+1.5 | 4.5 | 5 | 4.5 | 5 | 5 | 5 | 0 |
| 27+a1+e | 0.125+0.125+1.5 | 4.5 | 4.5 | 4.5 | 4.5 | 4.5 | 4 | 0 |
| 27+a2+e | 0.125+0.25+1.5 | 4.5 | 4.5 | 4.5 | 4.5 | 4.5 | 4 | 0 |
| 27+a3+e | 0.125+0.125+1.5 | 4.5 | 4.5 | 4.5 | 4.5 | 4.5 | 4 | 0 |

Table 3 B(3)

| Compound | Rate (kg/ha) | Herbicidal effect | | | | | | Phytotoxicity |
|---|---|---|---|---|---|---|---|---|
| | | *Galium aparine* | *Viola arvensis* | *Matricaria chamomilla* | *Stellaria media* | *Veronica hederaefolia* | *Alopecurus myosuroides* | wheat |
| | | 5-6L | 7L | 6-7L | 7-8L | 6-7L | 6-7L | 10L |
| 27+a4+e | 0.125+0.125+1.5 | 4.5 | 4.5 | 4.5 | 4.5 | 4.5 | 4 | 0 |
| 27+b+c | 0.125+0.125+1.5 | 5 | 5 | 5 | 5 | 5 | 5 | 0 |
| 27+b+d | 0.125+0.125+1.5 | 5 | 5 | 5 | 5 | 5 | 5 | 0 |
| 27+b+c | 0.125+0.125+1.5 | 4.5 | 4.5 | 4.5 | 5 | 5 | 4 | 0 |

Example 2

Plastic pots (1/2000a) were filled with sieved upland farm soil and seeded with *Xanthium strumarium, Abutilon theophrasti, Datura stramonium, Amaranthus viridis, Ipomoea hederacea, Solanum nigrum* and corn (dent corn). The seeds were covered with 1 cm of a soil layer. The plants were grown in the greenhouse. When corn plants grew to bear 5 leaves, a prescribed amount of wettable powder prepared according to the Formulation 1 was dispersed in 0.3 liter per are of water, and the dispersion was sprayed on the stalks and leaves of the plants with a microspray. 2,000 dilution of Neoesterine (Kumiai Kagaku), a spreader, was added. One month after the treatment, the plants kept in the greenhouse were tested for herbicidal effect and phytotoxicity. Herbicidal effect and phytotoxicity were evaluated according to the standard shown in Table 2. The results are shown in Table 4. In Table 4, the symbol * means comparative examples in which one of the compounds represented by the formula [I] or one of the compounds [a'] or [f] - [i] was used alone. a' is compound [a'], that is, monoethanolamine salts of 3,6-dichloropicolinic acid.

Table 4 (1)

| Compound | Rate (kg/ha) | Herbicidal effect *Xanthium strumarium* | *Abutilon theophraste* | *Datura stramonium* | *Amaranthus viridis* | *Ipomoea hederacea* | *Solanum nigrum* | Phytotoxicity Corn |
|---|---|---|---|---|---|---|---|---|
| 1* | 0.25 | 3 | 3 | 4 | 5 | 3 | 4 | 0 |
| 1+a' | 0.125+0.125 | 5 | 5 | 5 | 5 | 5 | 5 | 0 |
| a'* | 0.25 | 2 | 2 | 4 | 3 | 3 | 3 | 0 |
| f* | 0.1563 | 4 | 4 | 3 | 2 | 3 | 3 | 0 |
| g* | 0.1875 | 3 | 3 | 4 | 1 | 3 | 3 | 0 |
| h* | 0.1563 | 4 | 4 | 3 | 2 | 3 | 3 | 0 |
| i* | 0.1875 | 2 | 2 | 2 | 2 | 1 | 2 | 0 |
| 1+a'+f | 0.0625+0.0625+0.0313 | 5 | 5 | 5 | 5 | 5 | 5 | 0 |
| 1+a'+g | 0.0625+0.0625+0.0625 | 5 | 5 | 5 | 5 | 5 | 5 | 0 |
| 1+a'+h | 0.0625+0.0625+0.0313 | 5 | 5 | 5 | 5 | 5 | 5 | 0 |
| 1+a'+i | 0.0625+0.0625+0.0625 | 5 | 5 | 5 | 5 | 5 | 5 | 0 |
| 5* | 0.25 | 3 | 4 | 4 | 5 | 2 | 3 | 0 |
| 5+a' | 0.125+0.125 | 5 | 5 | 5 | 5 | 5 | 5 | 0 |
| 5+a'+h | 0.0625+0.0625+0.0313 | 5 | 5 | 5 | 5 | 5 | 5 | 0 |
| 5+a'+i | 0.0625+0.0625+0.0625 | 5 | 5 | 5 | 5 | 5 | 5 | 0 |
| 10* | 0.25 | 3 | 3 | 3 | 5 | 2 | 3 | 0 |
| 10+a' | 0.125+0.125 | 5 | 5 | 5 | 5 | 5 | 5 | 0 |
| 10+a'+h | 0.0625+0.0625+0.0313 | 5 | 5 | 5 | 5 | 5 | 5 | 0 |
| 10+a'+i | 0.0625+0.0625+0.0625 | 5 | 5 | 5 | 5 | 5 | 5 | 0 |
| 26* | 0.25 | 3 | 4 | 4 | 4 | 4 | 3 | 0 |
| 26+a' | 0.125+0.125 | 5 | 5 | 5 | 5 | 5 | 5 | 0 |
| 26+a'+g | 0.0625+0.0625+0.0625 | 5 | 5 | 5 | 5 | 5 | 5 | 0 |
| 26+a'+h | 0.0625+0.0625+0.0313 | 5 | 5 | 5 | 5 | 5 | 5 | 0 |
| 26+a'+i | 0.0625+0.0625+0.0625 | 5 | 5 | 5 | 5 | 5 | 5 | 0 |
| 27* | 0.25 | 4 | 4 | 5 | 5 | 4 | 4 | 0 |
| 27+a' | 0.125+0.125 | 5 | 5 | 5 | 5 | 5 | 5 | 0 |
| 27+a'+f | 0.0625+0.0625+0.0313 | 5 | 5 | 5 | 5 | 5 | 5 | 0 |
| 27+a'+g | 0.0625+0.0625+0.0625 | 5 | 5 | 5 | 5 | 5 | 5 | 0 |
| 27+a'+h | 0.0625+0.0625+0.0313 | 5 | 5 | 5 | 5 | 5 | 5 | 0 |
| 27+a'+i | 0.0625+0.0625+0.0625 | 5 | 5 | 5 | 5 | 5 | 5 | 0 |

Table 4 (2)

| Compound | Rate (kg/ha) | Herbicidal effect *Xanthium strumarium* | *Abutilon theophraste* | *Datura stramonium* | *Amaranthus viridis* | *Ipomoea hederacea* | *Solanum nigrum* | Phyto-toxicity Corn |
|---|---|---|---|---|---|---|---|---|
| 37* | 0.25 | 4 | 4 | 4 | 5 | 4 | 3 | 0 |
| 37+a' | 0.125+0.125 | 5 | 5 | 5 | 5 | 5 | 5 | 0 |
| 37+a'+f | 0.0625+0.0625+0.0313 | 5 | 5 | 5 | 5 | 5 | 5 | 0 |
| 37+a'+g | 0.0625+0.0625+0.0625 | 5 | 5 | 5 | 5 | 5 | 5 | 0 |
| 37+a'+h | 0.0625+0.0625+0.0313 | 5 | 5 | 5 | 5 | 5 | 5 | 0 |
| 37+a'+i | 0.0625+0.0625+0.0625 | 5 | 5 | 5 | 5 | 5 | 5 | 0 |
| 44* | 0.25 | 4 | 4 | 5 | 5 | 5 | 4 | 0 |
| 44+a' | 0.125+0.125 | 5 | 5 | 5 | 5 | 5 | 5 | 0 |
| 44+a'+i | 0.0625+0.0625+0.0625 | 5 | 5 | 5 | 5 | 5 | 5 | 0 |
| 46* | 0.25 | 3 | 4 | 4 | 5 | 4 | 3 | 0 |
| 46+a' | 0.125+0.125 | 5 | 5 | 5 | 5 | 5 | 5 | 0 |
| 46+a'+h | 0.0625+0.0625+0.0313 | 5 | 5 | 5 | 5 | 5 | 5 | 0 |
| 46+a'+i | 0.0625+0.0625+0.0625 | 5 | 5 | 5 | 5 | 5 | 5 | 0 |
| 55* | 0.25 | 4 | 4 | 5 | 5 | 5 | 4 | 0 |
| 55+a' | 0.125+0.125 | 5 | 5 | 5 | 5 | 5 | 5 | 0 |
| 55+a'+h | 0.0625+0.0625+0.0313 | 5 | 5 | 5 | 5 | 5 | 5 | 0 |
| 55+a'+i | 0.0625+0.0625+0.0625 | 5 | 5 | 5 | 5 | 5 | 5 | 0 |
| 63* | 0.25 | 4 | 4 | 4 | 5 | 4 | 3 | 0 |
| 63+a' | 0.125+0.125 | 5 | 5 | 5 | 5 | 5 | 5 | 0 |
| 63+a'+f | 0.0625+0.0625+0.0313 | 5 | 5 | 5 | 5 | 5 | 5 | 0 |
| 103* | 0.25 | 4 | 4 | 5 | 5 | 4 | 4 | 0 |
| 103+a' | 0.125+0.125 | 5 | 5 | 5 | 5 | 5 | 5 | 0 |
| 103+a'+i | 0.0625+0.0625+0.0625 | 5 | 5 | 5 | 5 | 5 | 5 | 0 |
| 114* | 0.25 | 3 | 4 | 3 | 5 | 3 | 2 | 0 |
| 114+a' | 0.125+0.125 | 5 | 5 | 5 | 5 | 5 | 5 | 0 |
| 122* | 0.25 | 4 | 3 | 4 | 5 | 3 | 3 | 0 |
| 122+a' | 0.125+0.125 | 5 | 5 | 5 | 5 | 5 | 5 | 0 |
| 122+a'+i | 0.0625+0.0625+0.0625 | 5 | 5 | 5 | 5 | 5 | 5 | 0 |
| 134* | 0.25 | 3 | 3 | 4 | 5 | 4 | 4 | 0 |
| 134+a' | 0.125+0.125 | 5 | 5 | 5 | 5 | 5 | 5 | 0 |
| 142* | 0.25 | 3 | 3 | 4 | 4 | 4 | 4 | 0 |
| 142+a' | 0.125+0.125 | 5 | 5 | 5 | 5 | 5 | 5 | 0 |
| 142+a'+h | 0.0625+0.0625+0.0313 | 5 | 5 | 5 | 5 | 5 | 5 | 0 |
| 142+a'+i | 0.0625+0.0625+0.0625 | 5 | 5 | 5 | 5 | 5 | 5 | 0 |

Example 3

A prescribed amount of emulsion prepared according to the Formulation 2 was dispersed in 0.3 liter per are of water and the dispersion was sprayed on the stalks and leaves of the plant grown in the same

manner as described in Example 2 with a microspray As a spreader, 1,000 dilution of Genapol X-060 (Hoechst), one of the member of a class of polyoxyethylene ether, was added. One month after treatment, herbicidal effect and phytotoxicity on these plants kept in the greenhouse were examined and evaluated according to the standard shown in Table 2. The results are shown in Table 5. In Table 5, the symbol * and a' are defined as in Table 4.

Table 5 (1)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| 2* | 0.25 | 3 | 4 | 4 | 5 | 3 | 4 | 0 |
| 2+a' | 0.125+0.125 | 5 | 5 | 5 | 5 | 5 | 5 | 0 |
| a'* | 0.25 | 2 | 2 | 4 | 3 | 3 | 3 | 0 |
| f* | 0.1563 | 3 | 4 | 3 | 2 | 3 | 3 | 0 |
| g* | 0.1875 | 3 | 2 | 4 | 1 | 3 | 3 | 0 |
| h* | 0.1563 | 4 | 3 | 3 | 2 | 3 | 3 | 0 |
| i* | 0.1875 | 2 | 3 | 2 | 2 | 1 | 2 | 0 |
| 2+a'+f | 0.0625+0.0625+0.0313 | 5 | 5 | 5 | 5 | 5 | 5 | 0 |
| 2+a'+g | 0.0625+0.0625+0.0625 | 5 | 5 | 5 | 5 | 5 | 5 | 0 |
| 2+a'+h | 0.0625+0.0625+0.0313 | 5 | 5 | 5 | 5 | 5 | 5 | 0 |
| 2+a'+i | 0.0625+0.0625+0.0625 | 5 | 5 | 5 | 5 | 5 | 5 | 0 |
| 5* | 0.25 | 3 | 3 | 4 | 5 | 2 | 3 | 0 |
| 5+a' | 0.125+0.125 | 5 | 5 | 5 | 5 | 5 | 5 | 0 |
| 5+a'+f | 0.0625+0.0625+0.0313 | 5 | 5 | 5 | 5 | 5 | 5 | 0 |
| 5+a'+g | 0.0625+0.0625+0.0625 | 5 | 5 | 5 | 5 | 5 | 5 | 0 |
| 10* | 0.25 | 3 | 3 | 3 | 5 | 2 | 3 | 0 |
| 10+a' | 0.125+0.125 | 5 | 5 | 5 | 5 | 5 | 5 | 0 |
| 10+a'+g | 0.0625+0.0625+0.0313 | 5 | 5 | 5 | 5 | 5 | 5 | 0 |
| 10+a'+i | 0.0625+0.0625+0.0625 | 5 | 5 | 5 | 5 | 5 | 5 | 0 |
| 26* | 0.25 | 3 | 3 | 4 | 4 | 4 | 3 | 0 |
| 26+a' | 0.125+0.125 | 5 | 5 | 5 | 5 | 5 | 5 | 0 |
| 26+a'+g | 0.0625+0.0625+0.0625 | 5 | 5 | 5 | 5 | 5 | 5 | 0 |
| 26+a'+h | 0.0625+0.0625+0.0313 | 5 | 5 | 5 | 5 | 5 | 5 | 0 |
| 26+a'+i | 0.0625+0.0625+0.0625 | 5 | 5 | 5 | 5 | 5 | 5 | 0 |
| 27* | 0.25 | 4 | 4 | 5 | 5 | 4 | 4 | 0 |
| 27+a' | 0.125+0.125 | 5 | 5 | 5 | 5 | 5 | 5 | 0 |
| 27+a'+f | 0.0625+0.0625+0.0313 | 5 | 5 | 5 | 5 | 5 | 5 | 0 |
| 27+a'+g | 0.0625+0.0625+0.0625 | 5 | 5 | 5 | 5 | 5 | 5 | 0 |
| 27+a'+h | 0.0625+0.0625+0.0313 | 5 | 5 | 5 | 5 | 5 | 5 | 0 |
| 27+a'+i | 0.0625+0.0625+0.0625 | 5 | 5 | 5 | 5 | 5 | 5 | 0 |

Table 5 (2)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| 40* | 0.25 | 4 | 3 | 4 | 5 | 3 | 3 | 0 |
| 40+a' | 0.125+0.125 | 5 | 5 | 5 | 5 | 5 | 5 | 0 |
| 40+a'+f | 0.0625+0.0625+0.0313 | 5 | 5 | 5 | 5 | 5 | 5 | 0 |
| 40+a'+g | 0.0625+0.0625+0.0625 | 5 | 5 | 5 | 5 | 5 | 5 | 0 |
| 40+a'+h | 0.0625+0.0625+0.0313 | 5 | 5 | 5 | 5 | 5 | 5 | 0 |
| 40+a'+i | 0.0625+0.0625+0.0625 | 5 | 5 | 5 | 5 | 5 | 5 | 0 |
| 44* | 0.25 | 4 | 4 | 5 | 5 | 5 | 4 | 0 |
| 44+a' | 0.125+0.125 | 5 | 5 | 5 | 5 | 5 | 5 | 0 |
| 44+a'+f | 0.0625+0.0625+0.0625 | 5 | 5 | 5 | 5 | 5 | 5 | 0 |
| 47* | 0.25 | 3 | 3 | 4 | 5 | 4 | 3 | 0 |
| 47+a' | 0.125+0.125 | 5 | 5 | 5 | 5 | 5 | 5 | 0 |
| 47+a'+h | 0.0625+0.0625+0.0313 | 5 | 5 | 5 | 5 | 5 | 5 | 0 |
| 47+a'+i | 0.0625+0.0625+0.0625 | 5 | 5 | 5 | 5 | 5 | 5 | 0 |
| 58* | 0.25 | 3 | 4 | 5 | 5 | 5 | 4 | 0 |
| 58+a' | 0.125+0.125 | 5 | 5 | 5 | 5 | 5 | 5 | 0 |
| 58+a'+f | 0.0625+0.0625+0.0313 | 5 | 5 | 5 | 5 | 5 | 5 | 0 |
| 58+a'+i | 0.0625+0.0625+0.0625 | 5 | 5 | 5 | 5 | 5 | 5 | 0 |
| 63* | 0.25 | 4 | 4 | 4 | 5 | 4 | 3 | 0 |
| 63+a' | 0.125+0.125 | 5 | 5 | 5 | 5 | 5 | 5 | 0 |
| 63+a'+f | 0.0625+0.0625+0.0313 | 5 | 5 | 5 | 5 | 5 | 5 | 0 |
| 106* | 0.25 | 4 | 3 | 5 | 4 | 4 | 4 | 0 |
| 106+a' | 0.125+0.125 | 5 | 5 | 5 | 5 | 5 | 5 | 0 |
| 106+a'+i | 0.0625+0.0625+0.0625 | 5 | 5 | 5 | 5 | 5 | 5 | 0 |
| 114* | 0.25 | 3 | 4 | 3 | 5 | 3 | 2 | 0 |
| 114+a' | 0.125+0.125 | 5 | 5 | 5 | 5 | 5 | 5 | 0 |
| 125* | 0.25 | 3 | 3 | 4 | 5 | 3 | 3 | 0 |
| 125+a' | 0.125+0.125 | 5 | 5 | 5 | 5 | 5 | 5 | 0 |
| 125+a'+i | 0.0625+0.0625+0.0625 | 5 | 5 | 5 | 5 | 5 | 5 | 0 |
| 137* | 0.25 | 3 | 3 | 5 | 5 | 4 | 4 | 0 |
| 137+a' | 0.125+0.125 | 5 | 5 | 5 | 5 | 5 | 5 | 0 |
| 142* | 0.25 | 3 | 3 | 4 | 4 | 4 | 4 | 0 |
| 142+a' | 0.125+0.125 | 5 | 5 | 5 | 5 | 5 | 5 | 0 |
| 142+a'+h | 0.0625+0.0625+0.0313 | 5 | 5 | 5 | 5 | 5 | 5 | 0 |
| 142+a'+i | 0.0625+0.0625+0.0625 | 5 | 5 | 5 | 5 | 5 | 5 | 0 |

Example 4

A prescribed amount of emulsion prepared according to the Formulation 2 was dispersed in 0.3 liter per are of water, and the dispersion was sprayed on the stalks and leaves of the plant grown in the same

manner as described in Example 2 with a microspray. As a spreader, 1,000 dilution of Agral#90 (ICI), one of the member of a class of polyoxyethylenenonylphenyl ether, was added The results are shown in Table 6. In Table 6, the symbol * and a' are defined as in Table 4.

## Table 6(1)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| 2* | 0.25 | 3 | 4 | 4 | 5 | 3 | 4 | 0 |
| 2+a' | 0.125+0.125 | 5 | 5 | 5 | 5 | 5 | 5 | 0 |
| a'* | 0.25 | 2 | 2 | 4 | 3 | 3 | 3 | 0 |
| f* | 0.1563 | 3 | 4 | 3 | 2 | 3 | 3 | 0 |
| g* | 0.1875 | 3 | 2 | 4 | 1 | 3 | 3 | 0 |
| h* | 0.1863 | 4 | 3 | 3 | 2 | 3 | 3 | 0 |
| i* | 0.1875 | 2 | 3 | 2 | 2 | 1 | 2 | 0 |
| 2+a'+f | 0.0625+0.0625+0.0313 | 5 | 5 | 5 | 5 | 5 | 5 | 0 |
| 2+a'+g | 0.0625+0.0625+0.0625 | 5 | 5 | 5 | 5 | 5 | 5 | 0 |
| 2+a'+h | 0.0625+0.0625+0.0313 | 5 | 5 | 5 | 5 | 5 | 5 | 0 |
| 2+a'+i | 0.0625+0.0625+0.0625 | 5 | 5 | 5 | 5 | 5 | 5 | 0 |
| 5* | 0.25 | 3 | 3 | 4 | 5 | 2 | 3 | 0 |
| 5+a' | 0.125+0.125 | 5 | 5 | 5 | 5 | 5 | 5 | 0 |
| 5+a'+f | 0.0625+0.0625+0.0313 | 5 | 5 | 5 | 5 | 5 | 5 | 0 |
| 5+a'+g | 0.0625+0.0625+0.0625 | 5 | 5 | 5 | 5 | 5 | 5 | 0 |

Table 6 (2)

| Compound | Rate (kg/ha) | Herbicidal effect: Xanthium strumarium | Abutilon theophraste | Datura stramonium | Amaranthus viridis | Ipomoea hederacea | Solanum nigrum | Phytotoxicity: Corn |
|---|---|---|---|---|---|---|---|---|
| 27* | 0.25 | 4 | 4 | 5 | 5 | 4 | 4 | 0 |
| 27+a' | 0.125+0.125 | 5 | 5 | 5 | 5 | 5 | 5 | 0 |
| 27+a'+f | 0.0625+0.0625+0.0313 | 5 | 5 | 5 | 5 | 5 | 5 | 0 |
| 27+a'+g | 0.0625+0.0625+0.0625 | 5 | 5 | 5 | 5 | 5 | 5 | 0 |
| 27+a'+h | 0.0625+0.0625+0.0313 | 5 | 5 | 5 | 5 | 5 | 5 | 0 |
| 27+a'+i | 0.0625+0.0625+0.0625 | 5 | 5 | 5 | 5 | 5 | 5 | 0 |
| 35* | 0.25 | 4 | 4 | 4 | 5 | 3 | 3 | 0 |
| 35+a' | 0.125+0.125 | 5 | 5 | 5 | 5 | 5 | 5 | 0 |
| 35+a'+f | 0.0625+0.0625+0.0313 | 5 | 5 | 5 | 5 | 5 | 5 | 0 |
| 35+a'+g | 0.0625+0.0625+0.0625 | 5 | 5 | 5 | 5 | 5 | 5 | 0 |
| 35+a'+h | 0.0625+0.0625+0.0313 | 5 | 5 | 5 | 5 | 5 | 5 | 0 |
| 35+a'+i | 0.0625+0.0625+0.0625 | 5 | 5 | 5 | 5 | 5 | 5 | 0 |
| 44* | 0.25 | 4 | 4 | 5 | 5 | 5 | 4 | 0 |
| 44+a' | 0.125+0.125 | 5 | 5 | 5 | 5 | 5 | 5 | 0 |
| 44+a'+f | 0.0625+0.0625+0.0625 | 5 | 5 | 5 | 5 | 5 | 5 | 0 |
| 47* | 0.25 | 3 | 3 | 4 | 5 | 4 | 3 | 0 |
| 47+a' | 0.125+0.125 | 5 | 5 | 5 | 5 | 5 | 5 | 0 |
| 47+a'+f | 0.0625+0.0625+0.0313 | 5 | 5 | 5 | 5 | 5 | 5 | 0 |
| 47+a'+i | 0.0625+0.0625+0.0625 | 5 | 5 | 5 | 5 | 5 | 5 | 0 |
| 58* | 0.25 | 3 | 4 | 5 | 5 | 5 | 4 | 0 |
| 58+a' | 0.125+0.125 | 5 | 5 | 5 | 5 | 5 | 5 | 0 |
| 58+a'+f | 0.0625+0.0625+0.0313 | 5 | 5 | 5 | 5 | 5 | 5 | 0 |
| 58+a'+i | 0.0625+0.0625+0.0625 | 5 | 5 | 5 | 5 | 5 | 5 | 0 |

Example 5

A prescribed amount of emulsion prepared according to the Formulation 2 was dispersed in 0.3 liter er are of water, and the dispersion was sprayed on the stalks and leaves of he plant grown in the same

manner as described in Example 2 with a microspray As a spreader, 1,000 dilution of Genapol LRO (Hoechst), one of the member of a class of alkyldiglycol ether, was added. The results are shown in Table 7. In Table 7, the symbol * and a' are defined as in Table 4.

Table 7(1)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| 2* | 0.25 | 3 | 4 | 4 | 5 | 3 | 4 | 0 |
| 2+a' | 0.125+0.125 | 5 | 5 | 5 | 5 | 5 | 5 | 0 |
| a'* | 0.25 | 2 | 2 | 4 | 3 | 3 | 3 | 0 |
| f* | 0.1563 | 3 | 4 | 3 | 2 | 3 | 3 | 0 |
| g* | 0.1875 | 3 | 2 | 4 | 1 | 3 | 3 | 0 |
| h* | 0.1563 | 4 | 3 | 3 | 2 | 3 | 3 | 0 |
| i* | 0.1875 | 2 | 3 | 2 | 2 | 1 | 2 | 0 |
| 2+a'+f | 0.0625+0.0625+0.0313 | 5 | 5 | 5 | 5 | 5 | 5 | 0 |
| 2+a'+g | 0.0625+0.0625+0.0625 | 5 | 5 | 5 | 5 | 5 | 5 | 0 |
| 2+a'+h | 0.0625+0.0625+0.0313 | 5 | 5 | 5 | 5 | 5 | 5 | 0 |
| 2+a'+i | 0.0625+0.0625+0.0625 | 5 | 5 | 5 | 5 | 5 | 5 | 0 |
| 10* | 0.25 | 3 | 4 | 4 | 5 | 2 | 3 | 0 |
| 10+a' | 0.125+0.125 | 5 | 5 | 5 | 5 | 5 | 5 | 0 |
| 10+a'+g | 0.0625+0.0625+0.0313 | 5 | 5 | 5 | 5 | 5 | 5 | 0 |
| 10+a'+i | 0.0625+0.0625+0.0625 | 5 | 5 | 5 | 5 | 5 | 5 | 0 |

Table 7(2)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| 27* | 0.25 | 4 | 4 | 5 | 5 | 4 | 4 | 0 |
| 27+a' | 0.125+0.125 | 5 | 5 | 5 | 5 | 5 | 5 | 0 |
| 27+a'+f | 0.0625+0.0625+0.0313 | 5 | 5 | 5 | 5 | 5 | 5 | 0 |
| 27+a'+g | 0.0625+0.0625+0.0625 | 5 | 5 | 5 | 5 | 5 | 5 | 0 |
| 27+a'+h | 0.0625+0.0625+0.0313 | 5 | 5 | 5 | 5 | 5 | 5 | 0 |
| 27+a'+i | 0.0625+0.0625+0.0625 | 5 | 5 | 5 | 5 | 5 | 5 | 0 |
| 35* | 0.25 | 4 | 4 | 4 | 5 | 3 | 3 | 0 |
| 35+a' | 0.125+0.125 | 5 | 5 | 5 | 5 | 5 | 5 | 0 |
| 35+a'+f | 0.0625+0.0625+0.0313 | 5 | 5 | 5 | 5 | 5 | 5 | 0 |
| 35+a'+g | 0.0625+0.0625+0.0625 | 5 | 5 | 5 | 5 | 5 | 5 | 0 |
| 35+a'+h | 0.0625+0.0625+0.0313 | 5 | 5 | 5 | 5 | 5 | 5 | 0 |
| 35+a'+i | 0.0625+0.0625+0.0625 | 5 | 5 | 5 | 5 | 5 | 5 | 0 |
| 40* | 0.25 | 4 | 4 | 5 | 5 | 5 | 4 | 0 |
| 40+a' | 0.125+0.125 | 5 | 5 | 5 | 5 | 5 | 5 | 0 |
| 40+a'+f | 0.0625+0.0625+0.0625 | 5 | 5 | 5 | 5 | 5 | 5 | 0 |
| 47* | 0.25 | 3 | 3 | 4 | 5 | 4 | 3 | 0 |
| 47+a' | 0.125+0.125 | 5 | 5 | 5 | 5 | 5 | 5 | 0 |
| 47+a'+f | 0.0625+0.0625+0.0313 | 5 | 5 | 5 | 5 | 5 | 5 | 0 |
| 47+a'+i | 0.0625+0.0625+0.0625 | 5 | 5 | 5 | 5 | 5 | 5 | 0 |
| 108* | 0.25 | 3 | 4 | 5 | 5 | 5 | 4 | 0 |
| 108+a' | 0.125+0.125 | 5 | 5 | 5 | 5 | 5 | 5 | 0 |
| 108+a'+f | 0.0625+0.0625+0.0313 | 5 | 5 | 5 | 5 | 5 | 5 | 0 |
| 108+a'+i | 0.0625+0.0625+0.0625 | 5 | 5 | 5 | 5 | 5 | 5 | 0 |

Example 6

Example 5 was repeated except that compounds and a spreader were changed. As a spreader, 1,000 dilution of DRA-1500 (Tohokagaku kogyo), one of the member of a class of ester fatty acid ester of

polyoxyethylene, was added The results are shown in Table 8. In Table 8, the symbol * and a' are defined as in Table 4.

Table 8 (1)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| 3* | 0.25 | 3 | 4 | 5 | 4 | 3 | 4 | 0 |
| 3+a' | 0.125+0.125 | 5 | 5 | 5 | 5 | 5 | 5 | 0 |
| a'* | 0.25 | 2 | 2 | 4 | 3 | 3 | 3 | 0 |
| f* | 0.1563 | 3 | 4 | 3 | 2 | 3 | 3 | 0 |
| g* | 0.1875 | 3 | 2 | 4 | 1 | 3 | 3 | 0 |
| h* | 0.1563 | 4 | 3 | 3 | 2 | 3 | 3 | 0 |
| i* | 0.1875 | 2 | 3 | 2 | 2 | 1 | 2 | 0 |
| 3+a'+f | 0.0625+0.0625+0.0313 | 5 | 5 | 5 | 5 | 5 | 5 | 0 |
| 3+a'+g | 0.0625+0.0625+0.0625 | 5 | 5 | 5 | 5 | 5 | 5 | 0 |
| 3+a'+h | 0.0625+0.0625+0.0313 | 5 | 5 | 5 | 5 | 5 | 5 | 0 |
| 3+a'+i | 0.0625+0.0625+0.0625 | 5 | 5 | 5 | 5 | 5 | 5 | 0 |
| 10* | 0.25 | 3 | 4 | 4 | 5 | 2 | 3 | 0 |
| 10+a' | 0.125+0.125 | 5 | 5 | 5 | 5 | 5 | 5 | 0 |
| 10+a'+g | 0.0625+0.0625+0.0313 | 5 | 5 | 5 | 5 | 5 | 5 | 0 |
| 10+a'+i | 0.0625+0.0625+0.0625 | 5 | 5 | 5 | 5 | 5 | 5 | 0 |
| 26* | 0.25 | 3 | 3 | 3 | 4 | 4 | 3 | 0 |
| 26+a' | 0.125+0.125 | 5 | 5 | 5 | 5 | 5 | 5 | 0 |
| 26+a'+g | 0.0625+0.0625+0.0625 | 5 | 5 | 5 | 5 | 5 | 5 | 0 |
| 26+a'+h | 0.0625+0.0625+0.0313 | 5 | 5 | 5 | 5 | 5 | 5 | 0 |
| 26+a'+i | 0.0625+0.0625+0.0625 | 5 | 5 | 5 | 5 | 5 | 5 | 0 |

Table 8 (2)

| Compound | Rate (kg/ha) | Herbicidal effect *Xanthium strumarium* | *Abutilon theophraste* | *Datura stramonium* | *Amaranthus viridis* | *Ipomoea hederacea* | *Solanum nigrum* | Phyto-toxicity Corn |
|---|---|---|---|---|---|---|---|---|
| 27* | 0.25 | 4 | 4 | 5 | 5 | 4 | 4 | 0 |
| 27+a' | 0.125+0.125 | 5 | 5 | 5 | 5 | 5 | 5 | 0 |
| 27+a'+f | 0.0625+0.0625+0.0313 | 5 | 5 | 5 | 5 | 5 | 5 | 0 |
| 27+a'+g | 0.0625+0.0625+0.0625 | 5 | 5 | 5 | 5 | 5 | 5 | 0 |
| 27+a'+h | 0.0625+0.0625+0.0313 | 5 | 5 | 5 | 5 | 5 | 5 | 0 |
| 27+a'+i | 0.0625+0.0625+0.0625 | 5 | 5 | 5 | 5 | 5 | 5 | 0 |
| 35* | 0.25 | 4 | 4 | 4 | 5 | 3 | 3 | 0 |
| 35+a' | 0.125+0.125 | 5 | 5 | 5 | 5 | 5 | 5 | 0 |
| 35+a'+f | 0.0625+0.0625+0.0313 | 5 | 5 | 5 | 5 | 5 | 5 | 0 |
| 35+a'+g | 0.0625+0.0625+0.0625 | 5 | 5 | 5 | 5 | 5 | 5 | 0 |
| 35+a'+h | 0.0625+0.0625+0.0313 | 5 | 5 | 5 | 5 | 5 | 5 | 0 |
| 35+a'+i | 0.0625+0.0625+0.0625 | 5 | 5 | 5 | 5 | 5 | 5 | 0 |
| 40* | 0.25 | 4 | 4 | 5 | 5 | 5 | 4 | 0 |
| 40+a' | 0.125+0.125 | 5 | 5 | 5 | 5 | 5 | 5 | 0 |
| 40+a'+f | 0.0625+0.0625+0.0625 | 5 | 5 | 5 | 5 | 5 | 5 | 0 |
| 66* | 0.25 | 3 | 3 | 4 | 5 | 4 | 3 | 0 |
| 66+a' | 0.125+0.125 | 5 | 5 | 5 | 5 | 5 | 5 | 0 |
| 66+a'+f | 0.0625+0.0625+0.0313 | 5 | 5 | 5 | 5 | 5 | 5 | 0 |
| 66+a'+i | 0.0625+0.0625+0.0625 | 5 | 5 | 5 | 5 | 5 | 5 | 0 |
| 108* | 0.25 | 3 | 4 | 5 | 5 | 5 | 4 | 0 |
| 108+a' | 0.125+0.125 | 5 | 5 | 5 | 5 | 5 | 5 | 0 |
| 108+a'+f | 0.0625+0.0625+0.0313 | 5 | 5 | 5 | 5 | 5 | 5 | 0 |
| 108+a'+i | 0.0625+0.0625+0.0625 | 5 | 5 | 5 | 5 | 5 | 5 | 0 |

Example 7

Example 5 was repeated except that compounds and a spreader were changed. As a spreader, 1,000 dilution of Tween 80 (Tohokagaku kogyo), one of the member of a class of polyoxyethylenesorbitan ether,

was added. The results are shown in Table 9. In Table 9, the symbol * and a' are defined as in Table 4.

## Table 9(1)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| 3* | 0.25 | 3 | 4 | 5 | 4 | 3 | 4 | 0 |
| 3+a' | 0.125+0.125 | 5 | 5 | 5 | 5 | 5 | 5 | 0 |
| a'* | 0.25 | 2 | 2 | 4 | 3 | 3 | 3 | 0 |
| f* | 0.1563 | 3 | 4 | 3 | 2 | 3 | 3 | 0 |
| g* | 0.1875 | 3 | 2 | 4 | 1 | 3 | 3 | 0 |
| h* | 0.1563 | 4 | 3 | 3 | 2 | 3 | 3 | 0 |
| i* | 0.1875 | 2 | 3 | 2 | 2 | 1 | 2 | 0 |
| 3+a'+f | 0.0625+0.0625+0.0313 | 5 | 5 | 5 | 5 | 5 | 5 | 0 |
| 3+a'+g | 0.0625+0.0625+0.0625 | 5 | 5 | 5 | 5 | 5 | 5 | 0 |
| 3+a'+h | 0.0625+0.0625+0.0313 | 5 | 5 | 5 | 5 | 5 | 5 | 0 |
| 3+a'+i | 0.0625+0.0625+0.0625 | 5 | 5 | 5 | 5 | 5 | 5 | 0 |
| 9* | 0.25 | 4 | 3 | 3 | 5 | 2 | 3 | 0 |
| 9+a' | 0.125+0.125 | 5 | 5 | 5 | 5 | 5 | 5 | 0 |
| 9+a'+f | 0.0625+0.0625+0.0313 | 5 | 5 | 5 | 5 | 5 | 5 | 0 |
| 9+a'+g | 0.0625+0.0625+0.0625 | 5 | 5 | 5 | 5 | 5 | 5 | 0 |
| 17* | 0.25 | 3 | 4 | 4 | 5 | 2 | 3 | 0 |
| 17+a' | 0.125+0.125 | 5 | 5 | 5 | 5 | 5 | 5 | 0 |
| 17+a'+g | 0.0625+0.0625+0.0313 | 5 | 5 | 5 | 5 | 5 | 5 | 0 |
| 17+a'+i | 0.0625+0.0625+0.0625 | 5 | 5 | 5 | 5 | 5 | 5 | 0 |

Table 9 (2)

| Compound | Rate (kg/ha) | Herbicidal effect *Xanthium strumarium* | *Abutilon theophraste* | *Datura stramonium* | *Amaranthus viridis* | *Ipomoea hederacea* | *Solanum nigrum* | Phyto-toxicity Corn |
|---|---|---|---|---|---|---|---|---|
| 27* | 0.25 | 4 | 4 | 5 | 5 | 4 | 4 | 0 |
| 27+a' | 0.125+0.125 | 5 | 5 | 5 | 5 | 5 | 5 | 0 |
| 27+a'+f | 0.0625+0.0625+0.0313 | 5 | 5 | 5 | 5 | 5 | 5 | 0 |
| 27+a'+g | 0.0625+0.0625+0.0625 | 5 | 5 | 5 | 5 | 5 | 5 | 0 |
| 27+a'+h | 0.0625+0.0625+0.0313 | 5 | 5 | 5 | 5 | 5 | 5 | 0 |
| 27+a'+i | 0.0625+0.0625+0.0625 | 5 | 5 | 5 | 5 | 5 | 5 | 0 |
| 35* | 0.25 | 4 | 4 | 4 | 5 | 3 | 3 | 0 |
| 35+a' | 0.125+0.125 | 5 | 5 | 5 | 5 | 5 | 5 | 0 |
| 35+a'+f | 0.0625+0.0625+0.0313 | 5 | 5 | 5 | 5 | 5 | 5 | 0 |
| 35+a'+g | 0.0625+0.0625+0.0625 | 5 | 5 | 5 | 5 | 5 | 5 | 0 |
| 35+a'+h | 0.0625+0.0625+0.0313 | 5 | 5 | 5 | 5 | 5 | 5 | 0 |
| 35+a'+i | 0.0625+0.0625+0.0625 | 5 | 5 | 5 | 5 | 5 | 5 | 0 |
| 51* | 0.25 | 4 | 4 | 5 | 5 | 5 | 4 | 0 |
| 51+a' | 0.125+0.125 | 5 | 5 | 5 | 5 | 5 | 5 | 0 |
| 51+a'+f | 0.0625+0.0625+0.0625 | 5 | 5 | 5 | 5 | 5 | 5 | 0 |
| 66* | 0.25 | 3 | 3 | 4 | 5 | 4 | 3 | 0 |
| 66+a' | 0.125+0.125 | 5 | 5 | 5 | 5 | 5 | 5 | 0 |
| 66+a'+f | 0.0625+0.0625+0.0313 | 5 | 5 | 5 | 5 | 5 | 5 | 0 |
| 66+a'+i | 0.0625+0.0625+0.0625 | 5 | 5 | 5 | 5 | 5 | 5 | 0 |
| 142* | 0.25 | 3 | 4 | 4 | 5 | 5 | 4 | 0 |
| 142+a' | 0.125+0.125 | 5 | 5 | 5 | 5 | 5 | 5 | 0 |
| 142+a'+f | 0.0625+0.0625+0.0313 | 5 | 5 | 5 | 5 | 5 | 5 | 0 |
| 142+a'+i | 0.0625+0.0625+0.0625 | 5 | 5 | 5 | 5 | 5 | 5 | 0 |

Example 8

Example 5 was repeated except that a compound and a spreader were changed. As a spreader, 1,000 dilution of Rapizol B-80 (Nippon Yushi), one of the member of a class of dialkylsulfosuccinic acid ester, was added. The results are shown in Table 10. In Table 10, the symbol * and a' are defined as in Table 4.

Table 10 (1)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| a* | 0.25 | 2 | 2 | 4 | 3 | 3 | 3 | 0 |
| f* | 0.1563 | 3 | 4 | 3 | 2 | 3 | 3 | 0 |
| g* | 0.1875 | 3 | 2 | 4 | 1 | 3 | 3 | 0 |
| h* | 0.1563 | 4 | 3 | 3 | 2 | 3 | 3 | 0 |
| i* | 0.1875 | 2 | 3 | 2 | 2 | 1 | 2 | 0 |
| 9* | 0.25 | 4 | 3 | 3 | 5 | 2 | 3 | 0 |
| 9+a' | 0.125+0.125 | 5 | 5 | 5 | 5 | 5 | 5 | 0 |
| 9+a'+f | 0.0625+0.0625+0.0313 | 5 | 5 | 5 | 5 | 5 | 5 | 0 |
| 9+a'+g | 0.0625+0.0625+0.0625 | 5 | 5 | 5 | 5 | 5 | 5 | 0 |
| 21* | 0.25 | 3 | 3 | 4 | 5 | 2 | 3 | 0 |
| 21+a' | 0.125+0.125 | 5 | 5 | 5 | 5 | 5 | 5 | 0 |
| 21+a'+g | 0.0625+0.0625+0.0313 | 5 | 5 | 5 | 5 | 5 | 5 | 0 |
| 21+a'+i | 0.0625+0.0625+0.0625 | 5 | 5 | 5 | 5 | 5 | 5 | 0 |
| 27* | 0.25 | 4 | 4 | 5 | 5 | 4 | 4 | 0 |
| 27+a' | 0.125+0.125 | 5 | 5 | 5 | 5 | 5 | 5 | 0 |
| 27+a'+f | 0.0625+0.0625+0.0313 | 5 | 5 | 5 | 5 | 5 | 5 | 0 |
| 27+a'+g | 0.0625+0.0625+0.0625 | 5 | 5 | 5 | 5 | 5 | 5 | 0 |
| 27+a'+h | 0.0625+0.0625+0.0313 | 5 | 5 | 5 | 5 | 5 | 5 | 0 |
| 27+a'+i | 0.0625+0.0625+0.0625 | 5 | 5 | 5 | 5 | 5 | 5 | 0 |
| 32* | 0.25 | 4 | 3 | 5 | 5 | 3 | 3 | 0 |
| 32+a' | 0.125+0.125 | 5 | 5 | 5 | 5 | 5 | 5 | 0 |

Table 10 (2)

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| 32+a'+f | 0.0625+0.0625+0.0313 | 5 | 5 | 5 | 5 | 5 | 5 | 0 |
| 32+a'+g | 0.0625+0.0625+0.0625 | 5 | 5 | 5 | 5 | 5 | 5 | 0 |
| 32+a'+h | 0.0625+0.0625+0.0313 | 5 | 5 | 5 | 5 | 5 | 5 | 0 |
| 32+a'+i | 0.0625+0.0625+0.0625 | 5 | 5 | 5 | 5 | 5 | 5 | 0 |
| 142* | 0.25 | 3 | 4 | 4 | 5 | 5 | 4 | 0 |
| 142+a' | 0.125+0.125 | 5 | 5 | 5 | 5 | 5 | 5 | 0 |
| 142+a'+f | 0.0625+0.0625+0.0313 | 5 | 5 | 5 | 5 | 5 | 5 | 0 |
| 142+a'+i | 0.0625+0.0625+0.0625 | 5 | 5 | 5 | 5 | 5 | 5 | 0 |

Example 9

Example 5 was repeated except that a compound and a spreader were changed. As a spreader, 100,000 dilution of Silwet L-77 (Union Carbide), one of the member of a class of silicon, was added The results are shown in Table 11. In Table 11, the symbol * and a' are defined as in Table 4.

Table 11

| Compound | Rate (kg/ha) | Herbicidal effect | | | | | | Phyto-toxicity |
|---|---|---|---|---|---|---|---|---|
| | | *Xanthium strumarium* | *Abutilon theophraste* | *Datura stramonium* | *Amaranthus viridis* | *Ipomoea hederacea* | *Solanum nigrum* | Corn |
| a'* | 0.25 | 2 | 2 | 4 | 3 | 3 | 3 | 0 |
| f* | 0.1563 | 3 | 4 | 3 | 2 | 3 | 3 | 0 |
| g* | 0.1875 | 3 | 2 | 4 | 1 | 3 | 3 | 0 |
| h* | 0.1563 | 4 | 3 | 3 | 2 | 3 | 3 | 0 |
| i* | 0.1875 | 2 | 3 | 2 | 2 | 1 | 2 | 0 |
| 9* | 0.25 | 4 | 3 | 3 | 5 | 2 | 3 | 0 |
| 9+a' | 0.125+0.125 | 5 | 5 | 5 | 5 | 5 | 5 | 0 |
| 9+a'+f | 0.0625+0.0625+0.0313 | 5 | 5 | 5 | 5 | 5 | 5 | 0 |
| 9+a'+g | 0.0625+0.0625+0.0625 | 5 | 5 | 5 | 5 | 5 | 5 | 0 |
| 23* | 0.25 | 3 | 4 | 4 | 5 | 2 | 3 | 0 |
| 23+a' | 0.125+0.125 | 5 | 5 | 5 | 5 | 5 | 5 | 0 |
| 23+a'+g | 0.0625+0.0625+0.0313 | 5 | 5 | 5 | 5 | 5 | 5 | 0 |
| 23+a'+i | 0.0625+0.0625+0.0625 | 5 | 5 | 5 | 5 | 5 | 5 | 0 |
| 27* | 0.25 | 4 | 4 | 5 | 5 | 4 | 4 | 0 |
| 27+a' | 0.125+0.125 | 5 | 5 | 5 | 5 | 5 | 5 | 0 |
| 27+a'+f | 0.0625+0.0625+0.0313 | 5 | 5 | 5 | 5 | 5 | 5 | 0 |
| 27+a'+g | 0.0625+0.0625+0.0625 | 5 | 5 | 5 | 5 | 5 | 5 | 0 |
| 27+a'+h | 0.0625+0.0625+0.0313 | 5 | 5 | 5 | 5 | 5 | 5 | 0 |
| 27+a'+i | 0.0625+0.0625+0.0625 | 5 | 5 | 5 | 5 | 5 | 5 | 0 |

Example 10

Plastic pots (1/2000a) were filled with sieved upland farm soil and seeded with *Xanthium strumarium, Abutilon theophrasti, Datura stramonium, Amaranthus viridis, Ipomiea hederacea, Solanum nigrum* and corn (dent corn). The seeds were covered with 1 cm of a soil layer. The plants were grown in the greenhouse. When corn plants grew to bear 5 leaves, a prescribed amount of wettable powder prepared according to the Formulation 1 was dispersed in 1.5 liter per are of water, and the dispersion was sprayed on the stalks and leaves of the plant with a microspray. One month after treatment, herbicidal effect and phytotoxicity on the plants kept in greenhouse was evaluated according to the standard shown in Table 2. The results are shown in Table 12. In Table 12, the symbol * means comparative example in which one of the compounds represented by the formula [I] or compounds [a'] or [f] - [i] was used alone. a'' is compound [a''], that is, dimethylamine salts of 2,4-dichlorophenoxyacetic acid. In the Table, the symbol (%) indicated

in the box "Added amount of spreaders" and "Added amount of nitrogen fertilizer" is a percentage (v/v) based on a total volume of water used for application.

Table 12 (1)

| Compound | Rate (kg/ha) | Spreader | Amount added (%) | Nitrogen fertilizer | Amount added (%) | Herbicidal effect: *Xanthium strumarium* | Herbicidal effect: *Abutilon theophraste* | Herbicidal effect: *Datura stramonium* | Herbicidal effect: *Amaranthus viridis* | Herbicidal effect: *Ipomoea hederacea* | Herbicidal effect: *Solanum nigrum* | Phytotoxicity: Corn |
|---|---|---|---|---|---|---|---|---|---|---|---|---|
| 18+a" | 0. 125+0. 125 | Genapol | 0. 1 | | | 5 | 5 | 5 | 5 | 5 | 5 | 0 |
| 18+a" | 0. 1+0. 1 | Genapol | 0. 1 | UAN32 | 3 | 5 | 5 | 5 | 5 | 5 | 5 | 0 |
| 18* | 0. 25 | Genapol | 0. 1 | | | 3 | 3 | 4 | 5 | 3 | 4 | 0 |
| a"* | 0. 25 | Genapol | 0. 1 | | | 3 | 2 | 4 | 3 | 3 | 3 | 0 |
| 18+a"+f | 0. 0625+0. 0625+0. 0313 | | | | | 5 | 4. 5 | 5 | 5 | 4 | 5 | 0 |
| 18+a"+f | 0. 0625+0. 0625+0. 0313 | Genapol | 0. 1 | | | 5 | 5 | 5 | 5 | 4. 5 | 5 | 0 |
| 18+a"+f | 0. 0625+0. 0625+0. 0313 | Genapol | 0. 1 | UAN32 | 3 | 5 | 5 | 5 | 5 | 5 | 5 | 0 |
| f* | 0. 25 | Genapol | 0. 1 | | | 2 | 2 | 4 | 3 | 3 | 3 | 2 |
| 18+a"+g | 0. 0625+0. 0625+0. 0313 | | | | | 5 | 4. 5 | 5 | 5 | 4. 5 | 5 | 0 |
| 18+a"+g | 0. 0625+0. 0625+0. 0313 | Genapol | 0. 1 | | | 5 | 5 | 5 | 5 | 4. 5 | 5 | 0 |
| 18+a"+g | 0. 0625+0. 0625+0. 0313 | Genapol | 0. 1 | UAN32 | 3 | 5 | 5 | 5 | 5 | 5 | 5 | 0 |
| g* | 0. 1563 | Genapol | 0. 1 | | | 3 | 4 | 3 | 2 | 3 | 3 | 0 |
| 18+a"+h | 0. 0625+0. 0625+0. 0625 | | | | | 5 | 4. 5 | 5 | 5 | 4. 5 | 5 | 0. 5 |
| 18+a"+h | 0. 0625+0. 0625+0. 0625 | Genapol | 0. 1 | | | 5 | 5 | 5 | 5 | 5 | 5 | 0. 5 |
| 18+a"+h | 0. 0625+0. 0625+0. 0625 | Genapol | 0. 1 | UAN32 | 3 | 5 | 5 | 5 | 5 | 5 | 5 | 0 |
| h* | 0. 1875 | Genapol | 0. 1 | | | 3 | 3 | 4 | 1 | 3 | 3 | 4 |
| 18+a"+i | 0. 0625+0. 0625+0. 0625 | | | | | 4. 5 | 5 | 5 | 5 | 4. 5 | 4. 5 | 0 |
| 18+a"+i | 0. 0625+0. 0625+0. 0625 | Genapol | 0. 1 | | | 5 | 5 | 5 | 5 | 4. 5 | 5 | 0 |
| 18+a"+i | 0. 0625+0. 0625+0. 0625 | Genapol | 0. 1 | UAN32 | 3 | 5 | 5 | 5 | 5 | 5 | 5 | 0 |
| i* | 0. 1875 | Genapol | 0. 1 | | | 2 | 3 | 3 | 2 | 3 | 3 | 0 |

Table 12 (2)

| Compound | Rate (kg/ha) | Spreader | Amount added (%) | Nitrogen fertilizer | Amount added (%) | Herbicidal effect *Xanthium strumarium* | Herbicidal effect *Abutilon theophraste* | Herbicidal effect *Datura stramonium* | Herbicidal effect *Amaranthus viridis* | Herbicidal effect *Ipomoea hederacea* | Herbicidal effect *Solanum nigrum* | Phytotoxicity Corn |
|---|---|---|---|---|---|---|---|---|---|---|---|---|
| 27+a" | 0.125+0.125 | Genapol | 0.1 | | | 5 | 4.5 | 5 | 5 | 4.5 | 5 | 0 |
| 27+a" | 0.125+0.125 | Rapizol | 0.1 | | | 5 | 4.5 | 5 | 5 | 4.5 | 5 | 0 |
| 27+a" | 0.125+0.125 | Surfynol | 0.1 | | | 5 | 4.5 | 5 | 5 | 4.5 | 5 | 0 |
| 27+a" | 0.125+0.125 | Agral 90 | 0.1 | | | 5 | 4.5 | 5 | 5 | 4.5 | 5 | 0 |
| 27+a" | 0.125+0.125 | Ad-Here | 0.1 | | | 5 | 4.5 | 5 | 5 | 4.5 | 5 | 0 |
| 27+a" | 0.125+0.125 | Genapol | 0.1 | UAN32 | 3 | 5 | 5 | 5 | 5 | 5 | 5 | 0 |
| 27+a" | 0.125+0.125 | Renex 36 | 0.1 | UAN32 | 3 | 5 | 5 | 5 | 5 | 5 | 5 | 0 |
| 27+a" | 0.125+0.125 | Rapizol | 0.1 | UAN32 | 3 | 5 | 5 | 5 | 5 | 5 | 5 | 0 |
| 27+a" | 0.125+0.125 | Surfynol | 0.1 | UAN32 | 3 | 5 | 5 | 5 | 5 | 5 | 5 | 0 |
| 27+a" | 0.125+0.125 | Agral 90 | 0.1 | UAN32 | 3 | 5 | 5 | 5 | 5 | 5 | 5 | 0 |
| 27+a" | 0.125+0.125 | Ad-Here | 0.1 | UAN32 | 3 | 5 | 5 | 5 | 5 | 5 | 5 | 0 |
| 27+a" | 0.125+0.125 | Genapol | 0.1 | UAN28 | 3 | 5 | 5 | 5 | 5 | 5 | 5 | 0 |
| 27+a" | 0.125+0.125 | Renex 36 | 0.1 | UAN28 | 3 | 5 | 5 | 5 | 5 | 5 | 5 | 0 |
| 27+a" | 0.125+0.125 | Rapizol | 0.1 | UAN28 | 3 | 5 | 5 | 5 | 5 | 5 | 5 | 0 |
| 27+a" | 0.125+0.125 | Surfynol | 0.1 | UAN28 | 3 | 5 | 5 | 5 | 5 | 5 | 5 | 0 |
| 27+a" | 0.125+0.125 | Agral 90 | 0.1 | UAN28 | 3 | 5 | 5 | 5 | 5 | 5 | 5 | 0 |
| 27+a" | 0.125+0.125 | Ad-Here | 0.1 | UAN28 | 3 | 5 | 5 | 5 | 5 | 5 | 5 | 0 |
| 27‡ | 0.25 | Genapol | 0.1 | UAN32 | 3 | 4 | 4 | 4.5 | 4.5 | 3 | 5 | 0 |
| 27‡ | 0.25 | Rapizol | 0.1 | UAN32 | 3 | 4 | 4 | 4.5 | 4.5 | 3.5 | 5 | 0 |
| 27‡ | 0.25 | Surfynol | 0.1 | UAN32 | 3 | 4 | 3.5 | 4.5 | 4.5 | 3 | 5 | 0 |
| 27‡ | 0.25 | Agral 90 | 0.1 | UAN32 | 3 | 4 | 4 | 4.5 | 4.5 | 3 | 5 | 0 |
| 27‡ | 0.25 | Ad-Here | 0.1 | UAN32 | 3 | 4 | 4 | 4.5 | 4.5 | 3 | 5 | 0.5 |

Table 12 (3)

| Compound | Rate (kg/ha) | Spreader | Amount added (%) | Nitrogen fertilizer | Amount added (%) | Herbicidal effect | | | | | | Phyto-toxicity |
|---|---|---|---|---|---|---|---|---|---|---|---|---|
| | | | | | | *Xanthium strumarium* | *Abutilon theophraste* | *Datura stramonium* | *Amaranthus viridis* | *Ipomoea hederacea* | *Solanum nigrum* | Corn |
| 27+a"+f | 0. 0625+0. 0625+0. 0313 | | | | | 4. 5 | 4. 5 | 4. 5 | 4. 5 | 4 | 5 | 0 |
| 27+a"+f | 0. 0625+0. 0625+0. 0313 | Genapol | 0. 1 | | | 5 | 4. 5 | 5 | 5 | 4. 5 | 5 | 0 |
| 27+a"+f | 0. 0625+0. 0625+0. 0313 | Rapizol | 0. 1 | | | 5 | 4. 5 | 5 | 5 | 4. 5 | 5 | 0 |
| 27+a"+f | 0. 0625+0. 0625+0. 0313 | Surfynol | 0. 1 | | | 5 | 4. 5 | 5 | 5 | 4. 5 | 5 | 0 |
| 27+a"+f | 0. 0625+0. 0625+0. 0313 | Agral 90 | 0. 1 | | | 5 | 4. 5 | 5 | 5 | 4. 5 | 5 | 0 |
| 27+a"+f | 0. 0625+0. 0625+0. 0313 | Ad-Here | 0. 1 | | | 5 | 4. 5 | 5 | 5 | 4. 5 | 5 | 0 |
| 27+a"+f | 0. 0625+0. 0625+0. 0313 | Genapol | 0. 1 | UAN32 | 3 | 5 | 5 | 5 | 5 | 5 | 5 | 0 |
| 27+a"+f | 0. 0625+0. 0625+0. 0313 | Rapizol | 0. 1 | UAN32 | 3 | 5 | 5 | 5 | 5 | 5 | 5 | 0 |
| 27+a"+f | 0. 0625+0. 0625+0. 0313 | Surfynol | 0. 1 | UAN32 | 3 | 5 | 5 | 5 | 5 | 5 | 5 | 0 |
| 27+a"+f | 0. 0625+0. 0625+0. 0313 | Agral 90 | 0. 1 | UAN32 | 3 | 5 | 5 | 5 | 5 | 5 | 5 | 0 |
| 27+a"+f | 0. 0625+0. 0625+0. 0313 | Ad-Here | 0. 1 | UAN32 | 3 | 5 | 5 | 5 | 5 | 5 | 5 | 0 |
| 27+a"+f | 0. 0625+0. 0625+0. 0313 | Genapol | 0. 1 | UAN28 | 3 | 5 | 5 | 5 | 5 | 5 | 5 | 0 |
| 27+a"+f | 0. 0625+0. 0625+0. 0313 | Rapizol | 0. 1 | UAN28 | 3 | 5 | 5 | 5 | 5 | 5 | 5 | 0 |
| 27+a"+f | 0. 0625+0. 0625+0. 0313 | Surfynol | 0. 1 | UAN28 | 3 | 5 | 5 | 5 | 5 | 5 | 5 | 0 |
| 27+a"+f | 0. 0625+0. 0625+0. 0313 | Agral 90 | 0. 1 | UAN28 | 3 | 5 | 5 | 5 | 5 | 5 | 5 | 0 |
| 27+a"+f | 0. 0625+0. 0625+0. 0313 | Ad-Here | 0. 1 | UAN28 | 3 | 5 | 5 | 5 | 5 | 5 | 5 | 0 |
| 27+a"+g | 0. 0625+0. 0625+0. 0625 | | | | | 5 | 4. 5 | 5 | 5 | 3 | 5 | 0 |
| 27+a"+g | 0. 0625+0. 0625+0. 0625 | Genapol | 0. 1 | | | 4 | 4. 5 | 5 | 5 | 4. 5 | 5 | 0 |
| 27+a"+g | 0. 0625+0. 0625+0. 0625 | Rapizol | 0. 1 | | | 5 | 4. 5 | 5 | 5 | 4. 5 | 5 | 0 |
| 27+a"+g | 0. 0625+0. 0625+0. 0625 | Surfynol | 0. 1 | | | 5 | 4. 5 | 5 | 5 | 4. 5 | 5 | 0 |
| 27+a"+g | 0. 0625+0. 0625+0. 0625 | Agral 90 | 0. 1 | | | 5 | 4. 5 | 5 | 5 | 4. 5 | 5 | 0 |
| 27+a"+g | 0. 0625+0. 0625+0. 0625 | Genapol | 0. 1 | UAN32 | 3 | 5 | 5 | 5 | 5 | 5 | 5 | 0 |

Table 12 (4)

| Compound | Rate (kg/ha) | Spreader | Amount added (%) | Nitrogen fertilizer | Amount added (%) | Herbicidal effect: *Xanthium strumarium* | *Abutilon theophraste* | *Datura stramonium* | *Amaranthus viridis* | *Ipomoea hederacea* | *Solanum nigrum* | Phyto-toxicity: Corn |
|---|---|---|---|---|---|---|---|---|---|---|---|---|
| 27+a"+g | 0.0625+0.0625+0.0625 | Rapizol | 0.1 | UAN32 | 3 | 5 | 5 | 5 | 5 | 5 | 5 | 0 |
| 27+a"+g | 0.0625+0.0625+0.0625 | Surfynol | 0.1 | UAN32 | 3 | 5 | 5 | 5 | 5 | 5 | 5 | 0 |
| 27+a"+g | 0.0625+0.0625+0.0625 | Agral 90 | 0.1 | UAN32 | 3 | 5 | 5 | 5 | 5 | 5 | 5 | 0 |
| 27+a"+h | 0.0625+0.0625+0.0625 | | | | | 5 | 4.5 | 5 | 5 | 4 | 5 | 0 |
| 27+a"+h | 0.0625+0.0625+0.0625 | Rapizol | 0.1 | | | 5 | 5 | 5 | 5 | 4.5 | 5 | 0 |
| 27+a"+h | 0.0625+0.0625+0.0625 | Surfynol | 0.1 | | | 5 | 5 | 5 | 5 | 4.5 | 5 | 0 |
| 27+a"+h | 0.0625+0.0625+0.0625 | Agral 90 | 0.1 | | | 3 | 3 | 4 | 5 | 4.5 | 3 | 0 |
| 27+a"+h | 0.0625+0.0625+0.0625 | Surfynol | 0.1 | UAN32 | 3 | 5 | 5 | 5 | 5 | 5 | 5 | 0 |
| 27+a"+h | 0.0625+0.0625+0.0625 | Agral 90 | 0.1 | UAN32 | 3 | 5 | 5 | 5 | 5 | 5 | 5 | 0 |
| 27+a"+i | 0.0625+0.0625+0.0625 | | | | | 5 | 4 | 5 | 5 | 4 | 5 | 0 |
| 27+a"+i | 0.0625+0.0625+0.0625 | Genapol | 0.1 | | | 5 | 4.5 | 5 | 5 | 4.5 | 5 | 0 |
| 27+a"+i | 0.0625+0.0625+0.0625 | Rapizol | 0.1 | | | 5 | 4.5 | 5 | 5 | 4.5 | 5 | 0 |
| 27+a"+i | 0.0625+0.0625+0.0625 | Genapol | 0.1 | UAN32 | 3 | 5 | 5 | 5 | 5 | 5 | 5 | 0 |
| 27+a"+i | 0.0625+0.0625+0.0625 | Rapizol | 0.1 | UAN32 | 3 | 5 | 5 | 5 | 5 | 5 | 5 | 0 |
| 44+a" | 0.125+0.125 | Genapol | 0.1 | UAN32 | 3 | 5 | 5 | 5 | 5 | 5 | 5 | 0 |
| 44* | 0.25 | Genapol | 0.1 | | | 4 | 4 | 5 | 5 | 5 | 4 | 0 |
| 44+a"+g | 0.0625+0.0625+0.0625 | Genapol | 0.1 | UAN32 | 3 | 5 | 5 | 5 | 5 | 5 | 5 | 0 |
| 44+a"+h | 0.0625+0.0625+0.0625 | Genapol | 0.1 | UAN32 | 3 | 5 | 5 | 5 | 5 | 5 | 5 | 0 |
| 44+a"+i | 0.0625+0.0625+0.0625 | Genapol | 0.1 | UAN32 | 3 | 5 | 5 | 5 | 5 | 5 | 5 | 0 |
| 44+a"+i | 0.0625+0.0625+0.0625 | Genapol | 0.1 | UAN28 | 3 | 5 | 5 | 5 | 5 | 5 | 5 | 0 |

Example 11

Example 1 was carried out except that compounds.were changed. The results are shown in Table 13. In Table 13, the symbol * indicates comparative example, a5 represents dimethylamine salts of d-2-(2,4-dichlorophenoxy)propionic acid which is an optically active compounds having R-configuration, and L represents a growth stage of plant development. For example, 5L indicates a plant at a growth stage of bearing 5 leaves.

Table 13

| Compound | Rate (kg/ha) | Herbicidal effect | | | | | | Phyto-toxicity |
|---|---|---|---|---|---|---|---|---|
| | | *Galium aparine* | *Viola arvensis* | *Matricaria chamomilla* | *Stellaria media* | *Veronica hederaefolia* | *Alopecurus myosuroides* | wheat |
| | | 6L | 5L | 3-5L | 6L | 5-7L | 5L | 7L |
| a5* | 0.125 | 2 | 1 | 1 | 2 | 2 | 0 | 0 |
| a5* | 0.25 | 3 | 1 | 2 | 3 | 3 | 0 | 0 |
| b* | 0.05 | 1 | 2 | 2 | 2 | 1 | 1 | 0 |
| c* | 1.0 | 0 | 0 | 3 | 3 | 1 | 3 | 0 |
| d* | 1.0 | 0 | 0 | 3 | 3 | 1 | 3 | 0 |
| e* | 1.0 | 0 | 0 | 1 | 0 | 0 | 3 | 0 |
| a5+b* | 0.125+0.05 | 2.5 | 3 | 3 | 4 | 3 | 0 | 0 |
| a5+b* | 0.25 +0.05 | 3.5 | 2 | 3 | 4 | 4 | 0 | 0 |
| a5+b+c* | 0.125+0.05+1.0 | 3.5 | 3 | 4 | 4.5 | 4 | 4 | 0 |
| a5+b+d* | 0.125+0.05+1.0 | 3 | 3 | 4 | 4 | 3.5 | 4 | 0 |
| a5+b+e* | 0.125+0.05+1.0 | 3 | 3 | 3.5 | 4 | 3 | 3.5 | 0 |
| a5+b+c* | 0.25 +0.05+1.0 | 4 | 3.5 | 4.5 | 4.5 | 4 | 4 | 0 |
| a5+b+d* | 0.25 +0.05+1.0 | 4 | 3 | 4 | 4 | 4 | 4 | 0 |
| a5+b+e* | 0.25 +0.05+1.0 | 4 | 3 | 4 | 4 | 4 | 4 | 0 |
| 27* | 0.125 | 2 | 3 | 3 | 4 | 4 | 0 | 0 |
| 27* | 0.25 | 3 | 3.5 | 4 | 4.5 | 4.5 | 1 | 0 |
| 27+a5+b | 0.125+0.125+0.05 | 4.5 | 4.5 | 4.5 | 5 | 5 | 2 | 0 |
| 27+a5+b+c | 0.125+0.125+0.05+1.0 | 5 | 5 | 5 | 5 | 5 | 5 | 0 |
| 27+a5+b+d | 0.125+0.125+0.05+1.0 | 5 | 5 | 5 | 5 | 5 | 4.5 | 0 |
| 27+a5+b+e | 0.125+0.125+0.05+1.0 | 5 | 5 | 5 | 5 | 5 | 4.5 | 0 |
| 44* | 0.125 | 1 | 3 | 2 | 3 | 3 | 0 | 0 |
| 44* | 0.25 | 2.5 | 3.5 | 3 | 4 | 4 | 1 | 0 |
| 44+a5+b | 0.125+0.125+0.05 | 4 | 4.5 | 4 | 5 | 5 | 2 | 0 |
| 44+a5+b+c | 0.125+0.125+0.05+1.0 | 4.5 | 5 | 5 | 5 | 5 | 4.5 | 0 |
| 44+a5+b+d | 0.125+0.125+0.05+1.0 | 4.5 | 5 | 5 | 5 | 5 | 4.5 | 0 |
| 44+a5+b+e | 0.125+0.125+0.05+1.0 | 4 | 5 | 5 | 5 | 5 | 4 | 0 |

## Claims

1. A herbicidal composition comprising (i) at least one compound selected from the group consisting of the urea compounds represented by the following general formula [I]:

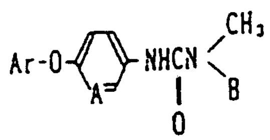

[I]

[wherein Ar is a group represented by the formula:

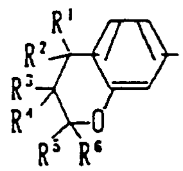

(wherein $R^1$ to $R^5$ independently represent a hydrogen atom, a lower alkyl group or a lower alkoxy group,
$R^6$ represents a hydrogen atom, a lower alkyl group, a lower alkoxyl group or a hydroxyl group;
a pair of $R^1$ and $R^5$ or a pair of $R^5$ and $R^6$ each, taken together, may represent an alkylene linkage which may be substituted by a lower alkyl group, and
may form 4 to 6 membered-ring with carbon atoms to which they are bound, or
$R^1$ and $R^2$, taken together, may form an ethylenedioxyl linkage, or $R^4$ and $R^5$, taken together, may form a dichloromethylene linkage),
A represents

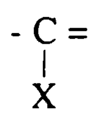

(wherein X represents a hydrogen atom, a chlorine atom, a nitro group or a trifluoromethyl group) and
B represents a hydrogen atom, a methyl group or a methoxy group]; and (ii) a compound represented by the following formula [a]:

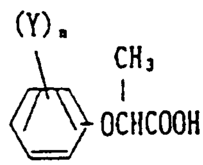

(wherein n is 1 or 2, Y is a chlorine atom)

or its salt or ester, as active ingredients.

**2.** A herbicidal composition comprising (i) at least one compound selected from the group consisting of compounds represented by the general formula [I], (ii) a compound represented by the formula [a] or a compound represented by the following formula [b]:

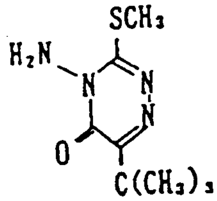

and (ii) at least one compound selected from the group consisting of compounds represented by the following formula:

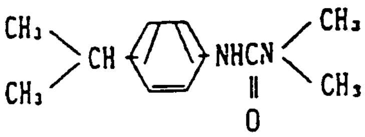

[c]

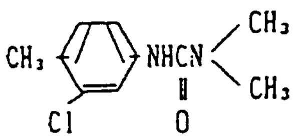

[d]

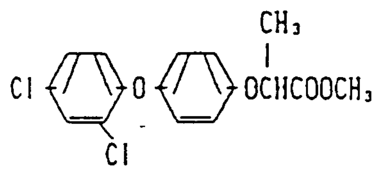

[e],

as active ingredients.

**3.** The herbicidal composition of claim 1 or 2 which is applied to wheat.

**4.** A herbicidal composition comprising (i) at least one compound selected from the group consisting of the urea compounds represented by the formula [I] and (ii) a compound represented by the following formula [a']:

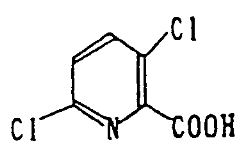

or its salt or ester, as active ingredients.

**5.** The herbicidal composition of claim 4, which further comprises at least one compound selected from the group consisting of compounds of the following formula:

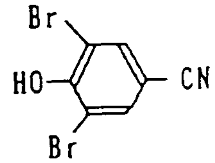 [f] 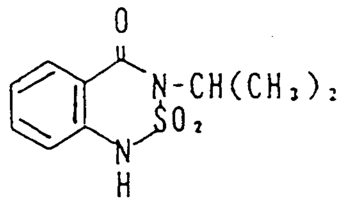 [g]

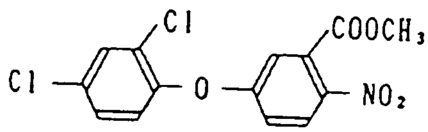 [h] or 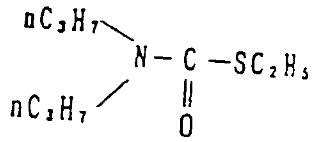 [i],

as an active ingredient.

6. The herbicidal composition of claim 4 or 5 which is applied to corn.

7. A herbicidal composition comprising (i) at least one compound selected from the group consisting of the urea compounds represented by the formula [I] and (ii) a compound represented by the following formula [a'']:

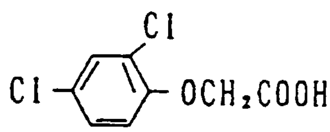 [a'']

or its salt or ester, as active ingredients,
and (iii) a spreader containing a nonionic surfactant or an anionic surfactant.

8. A herbicidal composition comprising (i) at least one compound selected from the group consisting of the compounds represented by the formula [I], (ii) a compound represented by the formula [a''], (iii) at least one compound selected from compounds represented by the formula [f], [g], [h] and [i], as active ingredients, and (iv) a spreader containing a nonionic surfactant or an anionic surfactant.

9. The herbicidal composition of claim 7 or 8 in which a nonionic surfactant is a polyoxyethylenealkyl ether or a polyoxyethylenealkylaryl ether.

10. The herbicidal composition of claim 7 or 8 in which an anionic surfactant is a dialkylsulfosuccinic acid ester.

11. The herbicidal composition of claim 7 or 8 which further comprises a nitrogen fertilizer.

12. The herbicidal composition of claim 11 in which nitrogen fertilizer is a ureaammonium nitrate.

13. The herbicidal composition of claim 7 - 12 which is applied to corn.

14. A herbicidal composition comprising (i) at least one compound selected from the group consisting of the urea compounds represented by the formula [I],
(ii) a compound represented by the formula [a],
and
(iii) a compound represented by the formula [b], as active ingredients.

**15.** The herbicidal composition of claim 14, which further comprises at least one compound selected from compounds represented by the formula [c], [d], and [e].